# EUROPEAN PATENT APPLICATION

(11) **EP 3 369 792 A1**
(43) Date of publication of application: **05.09.2018**
(21) Application number: 16859667.4
(22) Date of filing: 19.10.2016
(51) Int. Cl.: C09D 133/26, B32B 27/20, B32B 27/30, C08F 220/58, C09D 7/61, C09D 5/16, C08K 3/36

(54) **ANTIFOULING FILM, ANTIFOULING FILM FORMING COMPOSITION, ANTIFOULING FILM LAMINATE, AND PRODUCTION METHOD FOR ANTIFOULING FILM LAMINATE**

(30) Priority: 29.10.2015 JP 2015213337
(71) Applicant: Fujifilm Corporation, Minato-ku Tokyo 106-8620 (JP)
(72) Inventor: HATANAKA, Yusuke, Fujinomiya-shi Shizuoka 418-8666 (JP)
(74) Representative: Hoffmann Eitle
(86) International application number: PCT/JP2016/081022
(87) International publication number: WO 2017/073437

(57) **Abstract**

Provided are an antifouling film, which includes silica particles (a), a polymer (b) having an acrylamide structure and at least one substituent selected from the group consisting of -SO₃M and -COOM, and a polymer (c) having an acrylamide structure and a hydrocarbon group having 2 to 20 carbon atoms, and a composition for forming an antifouling film, an antifouling film laminate, and a method for manufacturing an antifouling film which are applications of the antifouling film. M represents a hydrogen atom or represents an atom or an atomic group which can become a cation by being dissociated.

## Description

### BACKGROUND OF THE INVENTION

### 1. Field of the Invention

The present disclosure relates to an antifouling film, a composition for forming an antifouling film, an antifouling film laminate, and a method for manufacturing an antifouling film laminate.

### 2. Description of the Related Art

The devices, members, building materials, and the like used for a long period of time in a state of being installed in indoor spaces or outdoor spaces are exposed to various environments. Therefore, the surface of the devices and the like are protected by various protection means such that the durability thereof is further improved. Examples of the protection means include means for disposing a protective member such as a cover or a protective sheet on the surface of a member and the like, means for coating the surface of a member with a protective film, and the like.

Even though the surface of the devices and the like includes protection means such as a protective film, dust, dirt, sludge, and the like are accumulated over a long period of time, or the protection means becomes wet with rain at the time of rainstorm. As a result, the protection means cannot perform the desired function or performance in some cases.

For example, generally, protective covers for surveillance cameras, protective covers for headlights, reflecting mirrors, surface protection films for traffic signs, and the like are used for a long period of time once the members or devices protected with the aforementioned protection means are installed. Therefore, protective films are required to have light-transmitting properties, protect members or devices in need of protection for a long period of time, and exhibit self-cleaning properties that do not require cleaning.

Usually, the surface of protection means is made hydrophilic so as to inhibit the light-transmitting properties from deteriorating due to fogging of the surface and to make it difficult for an aqueous stain to adhere to the surface.

For example, a hydrophilic member is suggested which includes, on a substrate, an undercoat layer that contains a substance obtained by hydrolyzing and polycondensing a metal alkoxide compound and a hydrophilic film that contains a substance obtained by hydrolyzing and polycondensing a hydrophilic polymer and a metal alkoxide compound, in which the hydrophilic film has excellent durability (for example, see JP2008-132764A).

As other means for preventing the adherence of sludge and the like, a water-repellent film is suggested which has a film containing metal alkoxide, a silane compound, and colloidal silica (for example, see JP2009-154480A).

### SUMMARY OF THE INVENTION

The devices, members, building materials, and the like, which are installed in outdoor spaces and exposed to ever-changing environments such as rainstorms, tend to experience the deterioration of various functions they originally have by the adherence of a stain. Therefore, the devices, members, building materials, and the like require cleaning or part replacement at regular time intervals. For example, provided that surface protection is performed using a hydrophilic film as described in JP2008-132764A, although antifogging properties can be maintained for a long period of time, in a case where a stain such as sewage containing solid contents adheres thereto, sometimes it is difficult to remove the solidified stain even though the hydrophilic film is wet with moisture by rainfall or the like.

However, even though a stain adheres to a protective member, for example, provided that the protective member is a member having so-called self-cleaning properties, which makes it easy to remove the stain having adhered to the surface of the protective member in a case where the protective member is wet with water from the rain, it is possible to greatly lighten the workload of cleaning or part replacement. Accordingly, there is a strong demand for an antifouling film which can function to maintain antifouling properties and antifogging properties for a long period of time and is almost maintenance-free.

The water-repellent film described in JP2009-154480A has low surface energy and is able to prevent the adherence of dust, dirt, and the like in the atmosphere. However, in view of the ability to prevent the adherence of sludge or the like and the self-cleaning properties exhibited after sludge adheres thereto, the water-repellent film is not necessarily satisfactory.

Furthermore, according to the examination performed by the inventor of the present invention, it was revealed that in a case where a silicone-based adhesive is used for fixing a protective member or the like to a required position, the components of the silicone-based adhesive are slowly volatilized over time, and thus affect the surface of the protective member, the protective film, and the like, the hydrophilicity of the surface slowly deteriorates, and the required antifogging properties cannot be obtained.

An object of an embodiment of the present invention is to provide an antifouling film which maintains antifouling properties and antifogging properties for a long period of time and has self-cleaning properties that make it easy to remove sludge and the like in a case where the sludge and the like adhere thereto.

An object of another embodiment of the present invention is to provide a composition for forming an antifouling film making it possible to form an antifouling film, which maintains antifouling properties and antifogging properties for a long period of time and has self-cleaning properties that make it easy to remove sludge and the like in a case where the sludge and the like adhere thereto, an antifouling film laminate including the antifouling film, and a method for manufacturing an antifouling film laminate.

Specific means for achieving the aforementioned objects includes the following embodiments.
<1> An antifouling film comprising silica particles (a), a polymer (b) having an acrylamide structure and at least one substituent selected from the group consisting of -SO₃M and -COOM, and a polymer (c) having an acrylamide structure and a hydrocarbon group having 2 to 20 carbon atoms. M represents a hydrogen atom or represents an atom or an atomic group which is able to become a cation by being dissociated.
<2> The antifouling film described in <1>, in which the polymer (b) is a polymer obtained by adding at least one kind of betaine monomer selected from the group consisting of a compound represented by General Formula (IV) shown below and a compound represented by General Formula (V) shown below to a terminal double bond included in at least one kind of polyfunctional (meth)acrylamide compound selected from the group consisting of a compound represented by General Formula (I) shown below and a compound represented by General Formula (II) shown below.

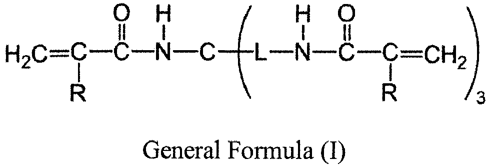

In General Formula (I), R represents a hydrogen atom or a methyl group, and a plurality of R's may be the same as or different from each other. L represents -O-, an alkylene group having 2 to 4 carbon atoms, or a divalent linking group obtained by combining -O- and an alkylene group having 2 to 4 carbon atoms.

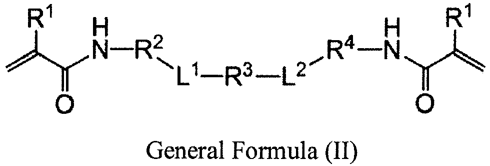

In General Formula (II), R¹ represents a hydrogen atom or a methyl group, and a plurality of R¹'s may be the same as or different from each other. R² and R⁴ each independently represent -O-, an alkylene group having 1 to 4 carbon atoms, or a divalent linking group obtained by combining -O- and an alkylene group having 1 to 4 carbon atoms, and R³ represents -O-, an alkylene group having 1 to 4 carbon atoms, a group represented by General Formula (III) shown below, or a divalent linking group obtained by combining two or more groups selected from -O-, an alkylene group having 1 to 4 carbon atoms, and the group represented by General Formula (III) shown below. L¹ and L² each independently represent a single bond or a group represented by General Formula (III) shown below.

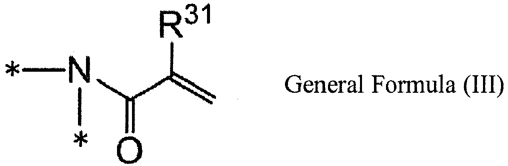

In General Formula (III), R³¹ represents a hydrogen atom or a methyl group, and * represents a binding site.

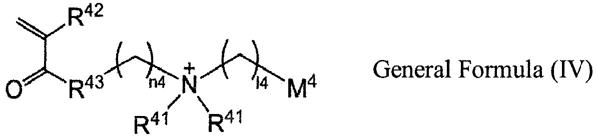

In General Formula (IV), R⁴¹ represents a methyl group, an ethyl group, a n-propyl group, or an i-propyl group, and a plurality of R⁴¹'s may be the same as or different from each other. R⁴² represents a hydrogen atom or a methyl group, and R⁴³ represents -NH- or -O-. n4 represents an integer of 1 to 4. 14 represents an integer of 1 to 4. M⁴ represents -SO₃⁻ or -COO⁻.

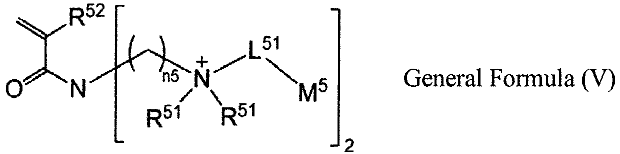

In General Formula (V), R⁵¹ represents a methyl group, an ethyl group, a n-propyl group, or an i-propyl group, and a plurality of R⁵¹'s may be the same as or different from each other. R⁵² represents a hydrogen atom or a methyl group. n5 represents an integer of 1 to 4. L⁵¹ represents a linear or branched alkylene group having 3 or 4 carbon atoms. M⁵ represents -SO₃⁻ or -COO⁻.

<3> The antifouling film described in <1> or <2>, in which the polymer (c) is a polymer having a structural unit represented by General Formula (1) shown below and a structural unit represented by General Formula (2) shown below.

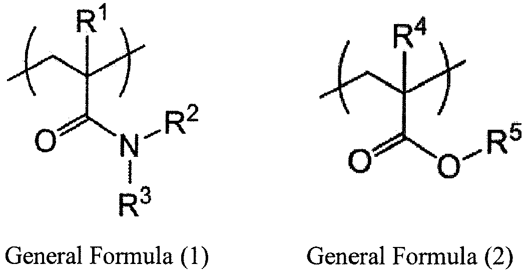

In General Formula (1) and General Formula (2), R¹ and R⁴ each independently represent a hydrogen atom or a methyl group. R² and R³ each independently represent a hydrogen atom, a methyl group, or an ethyl group. R⁵ represents an alkyl group having 2 or more carbon atoms or a substituent represented by General Formula (3) shown below. In a case where R⁵ represents a substituent represented by General Formula (3) shown below, a content of the structural unit represented by General Formula (2) having the substituent represented by General Formula (3) with respect to all the structural units included in the polymer (c) is equal to or smaller than 70 mol%.

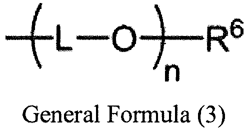

In General Formula (3), L represents an alkylene group having 2 to 6 carbon atoms, and R⁶ represents an unsubstituted alkyl group having 4 or more carbon atoms or an aromatic group-substituted alkyl group. n represents the average number of moles of polyether added and is 2 to 4.
<4> The antifouling film described in any one of <1> to <3>, in which at least a portion of a surface of the antifouling film is provided with the polymer (b) and the polymer (c).
<5> The antifouling film described in any one of <1> to <4>, in which a pure water contact angle of a surface of the antifouling film is equal to or smaller than 10°.
<6> The antifouling film described in any one of <1> to <5>, in which at least one kind of the polymer (b) or the polymer (c) is present between the silica particles adjacent to each other.
<7> The antifouling film described in any one of <1> to <6>, in which the polymer (c) further includes a structural unit represented by General Formula (4) shown below, and a content of the structural unit represented by General Formula (4) shown below with respect to all the structural units included in the polymer (c) is 0.3 mol% to 5.0 mol%. 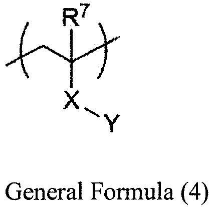
A group:

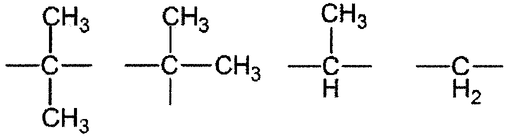

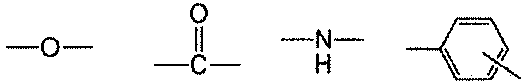

In General Formula (4), R⁷ represents a hydrogen atom or a methyl group. X represents a single bond or a divalent linking group constituted with at least one group selected from the group consisting of the divalent linking groups shown in A group.

Y represents a carboxylic acid group, a carboxylate group, a sulfonic acid group, a sulfonate group, a phosphoric acid group, a phosphate group, a phosphonic acid group, a phosphonate group, a hydroxy group, a carbobetaine group, a sulfobetaine group, an ammonium group, or a substituent represented by General Formula (3) shown below.

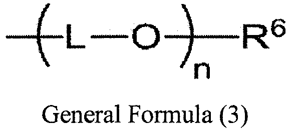

In General Formula (3), L represents an alkylene group having 2 to 6 carbon atoms, and R⁶ represents an unsubstituted alkyl group having 4 or more carbon atoms or an aromatic group-substituted alkyl group. n represents the average number of moles of polyether added and is 2 to 4.
<8> An antifouling film comprising silica particles (a) and a polymer (d) which has an acrylamide structure and has, in a molecule, at least one substituent selected from the group consisting of -SO₃M and -COOM and a hydrocarbon group having 2 to 20 carbon atoms. M represents a hydrogen atom or represents an atom or an atomic group which is able to become a cation by being dissociated.
<9> The antifouling film described in <8>, in which the polymer (d) is a polymer including a structural unit, which is derived from at least one kind of betaine monomer selected from the group consisting of a compound represented by General Formula (IV) shown below and a compound represented by General Formula (V) shown below, and a structural unit represented by General Formula (2) shown below.

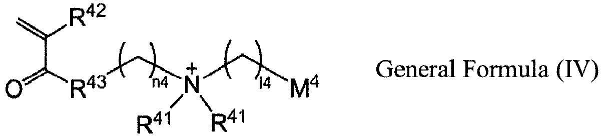

In General Formula (IV), R⁴¹ represents a methyl group, an ethyl group, a n-propyl group, or an i-propyl group, and a plurality of R⁴¹'s may be the same as or different from each other.

R⁴² represents a hydrogen atom or a methyl group, and R⁴³ represents -NH- or -O-. n4 represents an integer of 1 to 4. 14 represents an integer of 1 to 4. M⁴ represents -SO₃⁻ or -COO⁻.

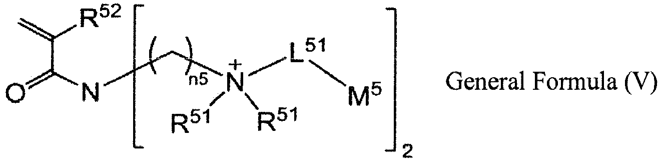

In General Formula (V), R⁵¹ represents a methyl group, an ethyl group, a n-propyl group, or an i-propyl group, and a plurality of R⁵¹'s may be the same as or different from each other.

R⁵² represents a hydrogen atom or a methyl group. n5 represents an integer of 1 to 4. L⁵¹ represents a linear or branched alkylene group having 3 or 4 carbon atoms. M⁵ represents -SO₃⁻ or -COO⁻.

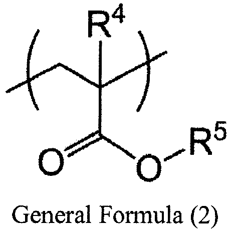

In General Formula (2), R⁴ represents a hydrogen atom or a methyl group. R⁵ represents an alkyl group or a substituent represented by General Formula (3) shown below. In a case where R⁵ is a substituent represented by General Formula (3) shown below, a content of the structural unit represented by General Formula (2) having the substituent represented by General Formula (3) with respect to all the structural units included in the polymer (d) is equal to or smaller than 70 mol%.

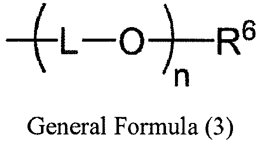

In General Formula (3), L represents an alkylene group having 2 to 6 carbon atoms, and R⁶ represents an unsubstituted alkyl group having 4 or more carbon atoms or an aromatic group-substituted alkyl group. n represents the average number of moles of polyether added and is 2 to 4.

<10> The antifouling film described in <8> or <9>, in which the polymer (d) is a polymer obtained by adding a partial structure including a structural unit that is derived from at least one kind of betaine monomer selected from the group consisting of the compound represented by General Formula (IV) shown below and the compound represented by General Formula (V) shown below and the structural unit that is represented by General Formula (2) shown below to all the terminals represented by STAR mark of at least one kind of polyfunctional (meth)acrylamide compound selected from the group consisting of a compound represented by General Formula (I-2) shown below and a compound represented by General Formula (II-2) shown below.

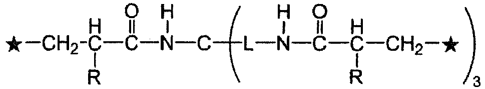

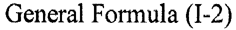

In General Formula (I-2), R represents a hydrogen atom or a methyl group, and a plurality of R's may be the same as or different from each other. L represents -O-, an alkylene group having 2 to 4 carbon atoms, or a divalent linking group obtained by combining -O- and an alkylene group having 2 to 4 carbon atoms. STAR mark represents a site to which a partial structure including a structural unit that is derived from at least one kind of betaine monomer selected from the group consisting of the compounds represented by General Formula (IV) and General Formula (V) and the structural unit that is represented by General Formula (2) is added.

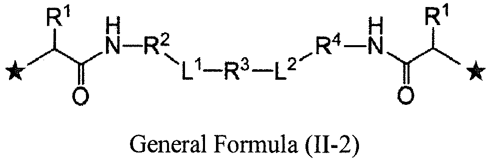

In General Formula (II-2), R¹ represents a hydrogen atom or a methyl group, R² and R⁴ each independently represent -O-, an alkylene group having 1 to 4 carbon atoms, or a divalent linking group obtained by combining -O- and an alkylene group having 1 to 4 carbon atoms, R³ represents -O-, an alkylene group having 1 to 4 carbon atoms, a group represented by General Formula (III-2) shown below, or a divalent linking group obtained by combining two or more groups selected from the group consisting of -O-, an alkylene group having 1 to 4 carbon atoms, and the group represented by General Formula (III-2) shown below, and L¹ and L² each independently represent a single bond or the group represented by General Formula (III-2) shown below. A plurality of R¹'s may be the same as or different from each other. STAR mark represents a site to which a partial structure including a structural unit that is derived from at least one kind of betaine monomer selected from the group consisting of the compounds represented by General Formula (IV) and General Formula (V) and the structural unit that is represented by General Formula (2) is added.

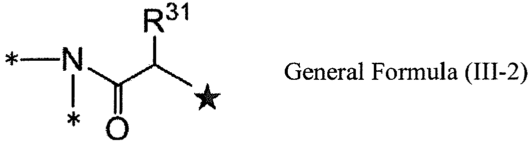

In General Formula (III-2), R³¹ represents a hydrogen atom or a methyl group, * represents a site bonded to a compound represented by General Formula (II-2), and STAR mark represents a site to which a partial structure including a structural unit that is derived from at least one kind of betaine monomer selected from the group consisting of the compounds represented by General Formula (IV) and General Formula (V) and the structural unit that is represented by General Formula (2).

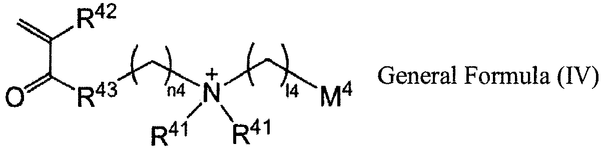

In General Formula (IV), R⁴¹ represents a methyl group, an ethyl group, a n-propyl group, or an i-propyl group, and a plurality of R⁴¹'s may be the same as or different from each other.

R⁴² represents a hydrogen atom or a methyl group, and R⁴³ represents -NH- or -O-. n4 represents an integer of 1 to 4. 14 represents an integer of 1 to 4. M⁴ represents -SO₃⁻ or -COO⁻.

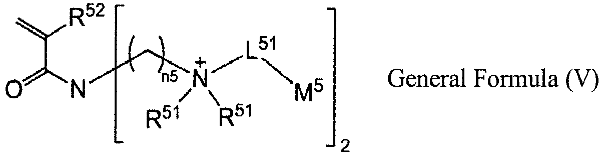

In General Formula (V), R⁵¹ represents a methyl group, an ethyl group, a n-propyl group, or an i-propyl group, and a plurality of R⁵¹'s may be the same as or different from each other.

R⁵² represents a hydrogen atom or a methyl group. n5 represents an integer of 1 to 4. L⁵¹ represents a linear or branched alkylene group having 3 or 4 carbon atoms. M⁵ represents -SO₃⁻ or -COO⁻.

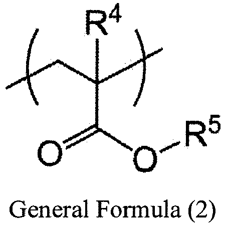

In General Formula (2), R⁴ represents a hydrogen atom or a methyl group. R⁵ represents an alkyl group or a substituent represented by General Formula (3) shown below. In a case where R⁵ is the substituent represented by General Formula (3) shown below, a content of the structural unit represented by General Formula (2) having the substituent represented by General Formula (3) with respect to all the structural units included in the polymer (d) is equal to or smaller than 70 mol%.

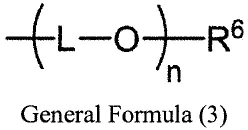

In General Formula (3), L represents an alkylene group having 2 to 6 carbon atoms, and R⁶ represents an unsubstituted alkyl group having 4 or more carbon atoms or an aromatic group-substituted alkyl group. n represents the average number of moles of polyether added and is 2 to 4.
<11> A composition for forming an antifouling film, comprising silica particles (a), a precursor of a polymer (b) having an acrylamide structure and at least one substituent selected from the group consisting of -SO₃M and -COOM, a polymer (c) having an acrylamide structure and a hydrocarbon group containing 2 to 20 carbon atoms, and a polymerization initiator (e). M represents a hydrogen atom or represents an atom or an atomic group that is able to become a cation by being dissociated.
<12> An antifouling film laminate comprising a base material and the antifouling film described in any one of <1> to <10> on the base material.
<13> A method for manufacturing an antifouling film laminate, comprising applying the composition for forming an antifouling film described in <11> onto a base material.
<14> The method for manufacturing an antifouling film laminate described in <13>, further comprising applying energy to the composition for forming an antifouling film applied onto the base material.

According to an embodiment of the present invention, there is provided an antifouling film which maintains antifouling properties and antifogging properties for a long period of time and has self-cleaning properties that make it easy to remove sludge and the like in a case where the sludge and the like adhere thereto.

According to another embodiment of the present invention, there are provided a composition for forming an antifouling film making it possible to form an antifouling film, which maintains antifouling properties and antifogging properties for a long period of time and has self-cleaning properties that make it easy to remove sludge and the like in a case where the sludge and the like adhere thereto, an antifouling film laminate including the antifouling film, and a method for manufacturing an antifouling film laminate.

### DESCRIPTION OF THE PREFERRED EMBODIMENTS

Hereinafter, an antifouling film, a composition for forming an antifouling film, an antifouling film laminate, and a method for manufacturing an antifouling film laminate as an embodiment of the present invention will be specifically described.

In the present specification, in a case where the amount of each of the components in a composition is mentioned, provided that the composition contains a plurality of substances corresponding to each of the components, unless otherwise specified, the amount of each of the components means the total amount of the plurality of substances present in the composition.

In the present specification, the term "solid contents" means the components except for a solvent. A liquid component such as a low-molecular weight component other than a solvent is also included in "solid contents" in the present specification.

In the present specification, a range of numerical values described using "to" means a range including the numbers listed before and after "to" as a minimum value and a maximum value respectively.

In the present specification, regarding ranges of numerical values that are gradationally described, the upper limit or the lower limit of one range of numerical values that is gradationally described may be substituted with the upper limit or the lower limit of another range of numerical values that is gradationally described. Furthermore, the upper limit or the lower limit of a range of numerical values described in the present specification may be substituted with the values shown in examples.

### <Antifouling film>

The antifouling film contains silica particles (a), a polymer (b) having an acrylamide structure and at least one substituent selected from the group consisting of -SO₃M and -COOM, and a polymer (c) having an acrylamide structure and a hydrocarbon group having 2 to 20 carbon atoms. M represents a hydrogen atom or represents an atom or an atomic group which can become a cation by being dissociated.

Hereinafter, in some cases, "silica particles (a)" will be referred to as particles (a), "polymer (b) having an acrylamide structure and at least one substituent selected from the group consisting of -SO₃M and -COOM" will be referred to as a polymer (b), and "polymer (c) having an acrylamide structure and a hydrocarbon group having 2 to 20 carbon atoms" will be referred to as a polymer (c).

For example, in a case where the substituents -SO₃M and -COOM in the polymer (b) are present as counterions of a quaternary ammonium cation in a betaine structure, the substituents are in the forms of -SO₃⁻ and -COO⁻. In the present specification, in a case where the aforementioned substituents are in the forms of -SO₃⁻ and -COO⁻ as counterions in a betaine structure, -SO₃⁻ and -COO⁻ are also included in the substituents represented by -SO₃M and -COOM.

The mechanism of action of the antifouling film of an embodiment in the present disclosure is unclear but is assumed to be as below.

The antifouling film of the present disclosure contains the hydrophilic silica particles (a), the polymer (b) having a substituent exhibiting excellent hydrophilicity, and the polymer (c) having a hydrophobic partial structure. Accordingly, in the polymers, a hydrophilic region and a hydrophobic region are mixed with each other in a well-balanced state. Due to the presence of the hydrophilic region, antifouling properties, which make it difficult for dirt or dust to adhere to the film, and antifogging properties are exhibited. Furthermore, due to the presence of a water-repellent region having the hydrophobic partial structure, a stain having adhered to the film is inhibited from firmly adhering to the film. It is considered that, therefore, for example, even in a case where sludge or the like adheres to the antifouling film, the antifouling film exhibits excellent self-cleaning properties in which by allowing the film to become wet with rain or the like, the water-repellent region repels the moisture having adhered to the film such that the sludge or the like having adhered to the surface easily floats and is dispersed in the moisture, and in this state, the sludge or the like is easily removed from the surface.

Particularly, in a preferred aspect of the polymer (b), a structure derived from acrylate having a polyfunctional acrylamide structure is excellently compatible with a structural unit derived from a betaine monomer having an acrylamide structure. Presumably, for this reason, the hydrophilicity of the polymer (b) is further improved, and better antifouling properties and antifogging properties are exhibited.

The antifouling film contains the hydrophilic silica particles (a), the polymer (b) having excellent hydrophilicity, and at least one of the substituents represented by -SO₃M and -COOM which are stable substituents. In addition, the coexisting polymer (c) has a hydrophobic group in a molecule thereof. Therefore, the antifouling film is hardly affected by the hydrophobic components volatilized from a silicone-based adhesive. Presumably, as a result, even in a case where the antifouling film is used for a member, such as a headlight cover for vehicles, fixed using a silicone-based adhesive, the deterioration of hydrophilicity of the surface of the antifouling film is inhibited for a long period of time.

Because the film containing the silica particles (a) also contains the polymer (b) and the polymer (c), the effects of the antifouling film are exerted. Therefore, an aspect may be adopted in which the polymer (b) and the polymer (c) are contained in the antifouling film as binders of the silica particles (a) and present between the silica particles (a) adjacent to each other. Alternatively, an aspect may be adopted in which the polymer (b) and the polymer (c) are present only in the surface region of the film containing the silica particles (a).

Even in a case where a polymer (d) is used which has a hydrophilic partial structure included in the polymer (b) and a hydrophobic partial structure included in the polymer (c) in combination in one molecule, the antifouling film as an embodiment of the present invention exerts the aforementioned effects as in the case where the polymer (b) and the polymer (c) are used in combination. The polymer (d) will be specifically described later.

Here, the present disclosure is not limited to the presumptive mechanism described above.

### -Silica particles (a)-

The antifouling film in the present disclosure contains at least one kind of silica particles (a) (particles (a)). The particles (a) favor the hydrophilicity through a hydroxy group on the surface of the particles and play a role of a hard filler. In this way, the particles (a) can improve the physical resistance of the antifouling film.

The shape of the particles (a) used in the antifouling film is not particularly limited, and according to the purpose, particles of various shapes can be used. For example, the particles can have a spherical shape, a plate shape, a needle shape, a bead shape, and the like. Among these, spherical particles are preferable because such particles can be easily obtained and allow the antifouling film to have excellent surface properties. In the present specification, the spherical particles also include the particles close to spherical particles that are seemingly spherical.

Regarding the particle diameter of the particles (a), from the viewpoint of inhibiting the scattering of transmitted light, the average primary particle diameter of the particles (a) is preferably equal to or smaller than 100 nm, more preferably equal to or smaller than 50 nm, and even more preferably equal to or smaller than 30 nm. In a case where the antifouling film is used for the purpose in which the transparency of the antifouling film is not important, the particle diameter is not limited to the above range.

Meanwhile, from the viewpoint of preventing the aggregation of the silica particles and the like, the average primary particle diameter of the particles (a) is preferably equal to or greater than 2 nm.

In the antifouling film, only one kind of particles (a) may be used, or two or more kinds of particles (a) may be used in combination. In a case where two or more kinds of particles (a) are used in combination, particles having different sizes, particles having different shapes, and the like may be used in combination.

The average primary particle diameter of the particles (a) is determined in a manner in which the particles are observed and imaged using a transmission electron microscope, a projected area is measured for 300 or more particles from the image taken and approximated to a circular shape having an area equivalent to the projected area, and measuring the diameter of the obtained circle.

Examples of the silica particles (a) include wet-process silica particles, vapor-phase process silica particles, colloidal silica, anhydrous silica particles, hydrous silica particles, and the like. Among these, from the viewpoint of preventing the aggregation of the silica particles, wet-process silica particles and colloidal silica are preferable.

As the silica particles (a), commercial products may be used. Examples of commercial silica particles usable as the particles (a) in the present embodiment include a SNOWTEX (registered trademark) series (for example, SNOWTEX O and the like) manufactured by NISSAN CHEMICAL INDUSTRIES, LTD., a Nalco (registered trademark) series (for example, Nalco 8699 and the like) manufactured by Nalco Chemical Company, and the like.

The content of the silica particles (a) with respect to the total solid content of the antifouling film is preferably 5% by mass to 95% by mass, more preferably 10% by mass to 90% by mass, and even more preferably within a range of 20% by mass to 80% by mass.

In a case where the content of the particles (a) is within the above range, the hardness, the scratch resistance, the impact resistance, and the hydrophilicity of the antifouling film become excellent.

As will be described later, the antifouling film can be formed using a composition for forming an antifouling film containing the silica particles (a). In a case where a coating solution for forming an antifouling film containing the particles (a) is prepared, the content rate of the particles (a) in the coating solution with respect to the total mass of the coating solution is preferably equal to or lower than 30% by mass, more preferably equal to or lower than 20% by mass, and even more preferably equal to or lower than 10% by mass. It is preferable that the proportion of the particles (a) in the coating solution is within the above range, because then the dispersibility of the particles (a) in the solution is improved, and the particles (a) in the composition are hardly aggregated.

### -Polymer (b)-

The antifouling film in the present disclosure contains the polymer (b) having an acrylamide structure and at least one substituent selected from the group consisting of -SO₃M and -COOM. M represents a hydrogen atom or represents an atom or an atomic group which can become a cation by being dissociated.

It is preferable that the polymer (b) has a partial structure derived from a polyfunctional acrylamide structure having a plurality of acrylamide structures in a molecule.

More specifically, it is preferable that the polymer (b) has a structure derived from at least one kind of polyfunctional (meth)acrylamide compound selected from the group consisting of a compound represented by General Formula (I) shown below and a compound represented by General Formula (II) shown below.

The polyfunctional (meth)acrylamide compound has an amide bond. Accordingly, the compound can form a film having excellent hydrophilicity. Furthermore, the polyfunctional (meth)acrylamide compound has a plurality of ethylenically unsaturated bonds. Accordingly, the compound can function as a cross-linking agent. As a result, the antifouling film having a structure derived from the polyfunctional (meth)acrylamide compound has higher film hardness and more effectively maintains antifogging properties and antifouling properties.

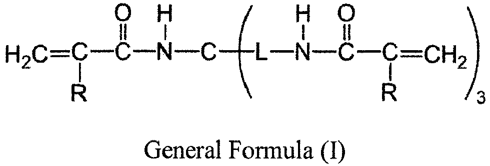

In General Formula (I), R represents a hydrogen atom or a methyl group, and a plurality of R's may be the same as or different from each other.

L represents -O-, an alkylene group having 2 to 4 carbon atoms, or a divalent linking group obtained by combining -O- and an alkylene group having 2 to 4 carbon atoms. It is preferable that a carbon atom is present in a position adjacent to a nitrogen atom in the amide group adjacent to L. That is, as a group adjacent to a nitrogen atom in the amide group, an alkylene group having 2 to 4 carbon atoms is preferable.

Examples of the alkylene group having 2 to 4 carbon atoms include an ethylene group, a propylene group, a n-butylene group, an i-butylene group, a t-butylene group, and the like.

Examples of "divalent linking group obtained by combining -O- and an alkylene group having 2 to 4 carbon atoms" include an alkylene group having 2 to 4 carbon atoms containing -O- such as -OCH₂CH₂-, -OCH₂CH₂CH₂-, -OCH₂CH₂CH₂CH₂-, -CH₂OCH₂-, -CH₂OCH₂CH₂-, or -CH₂OCH₂CH₂CH₂-, a group represented by -(O-alkylene group (having 2 to 4 carbon atoms))ₙ-, and the like. n represents an integer equal to or greater than 2. The upper limit of n is not particularly limited, but is preferably about 100, for example. In each of the divalent linking groups exemplified above, an amide group may be bonded to any of the two binding sites.

Among these, as L, from the viewpoint of the effects, an alkylene group having 2 to 4 carbon atoms containing -O-, that is, an aspect in which an oxygen atom is contained in any of carbon chains of an alkylene group is more preferable.

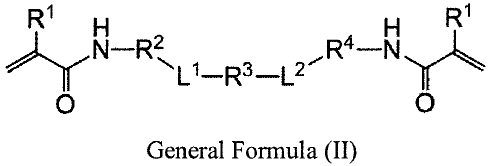

In General Formula (II), R¹ represents a hydrogen atom or a methyl group. A plurality of R¹'s may be the same as or different from each other.

R² and R⁴ each independently represent -O-, an alkylene group having 1 to 4 carbon atoms, or a divalent linking group obtained by combining -O- and an alkylene group having 2 to 4 carbon atoms. Generally, a carbon atom is in a position adjacent to a nitrogen atom in the amide group adjacent to R² and R⁴. As the group adjacent to a nitrogen atom in the amide group, an alkylene group having 1 to 4 carbon atoms is preferable.

Examples of the alkylene group having 1 to 4 carbon atoms include a methylene group, an ethylene group, a propylene group, a n-butylene group, an i-butylene group, and a t-butylene group.

Examples of "divalent linking group obtained by combining -O- and an alkylene group having 1 to 4 carbon atoms" include an alkylene group having 1 to 4 carbon atoms containing -O- such as -OCH₂-, -OCH₂CH₂-, -OCH₂CH₂CH₂-, -OCH₂CH₂CH₂CH₂-, -CH₂OCH₂-, -CH₂OCH₂CH₂-, or -CH₂OCH₂CH₂CH₂-, a group represented by -(O-alkylene group (having 1 to 4 carbon atoms))ₙ-, and the like. n represents an integer equal to or greater than 2. The upper limit of n is not particularly limited, but is preferably about 100, for example. In each of the groups exemplified above as "divalent linking group obtained by combining -O- and an alkylene group having 1 to 4 carbon atoms", an amide group may be bonded to any of two binding sites.

Among these, as R² and R⁴, from the viewpoint of the effects, an alkylene group having 1 to 4 carbon atoms containing -O- is more preferable.

R³ represents -O-, an alkylene group having 1 to 4 carbon atoms, a linking group represented by General Formula (III) shown below, or a divalent linking group obtained by combining two or more groups selected from -O-, an alkylene group having 1 to 4 carbon atoms, and a group represented by General Formula (III) shown below.

Examples of the alkylene group having 1 to 4 carbon atoms include a methylene group, an ethylene group, a propylene group, a n-butylene group, an i-butylene group, and a t-butylene group.

Examples of "divalent linking group obtained by combining two or more groups selected from -O-, an alkylene group having 1 to 4 carbon atoms, and a group represented by General Formula (III) shown below" include the aforementioned groups represented by R² and R4. In a case where a group represented by General Formula (III) is combined with another group, it is preferable that an alkylene group having 1 to 4 carbon atoms is bonded to a nitrogen atom in the group represented by General Formula (III).

Among these, as R³, from the viewpoint of effects, an alkylene group having 1 to 4 carbon atoms, an alkylene group having 1 to 4 carbon atoms containing -O-, or a group represented by General Formula (III) is preferable.

L¹ and L² each independently represent a single bond or a group represented by General Formula (III) shown below.

In a case where R³ represents a linking group represented by General Formula (III), it is preferable that L¹ and L² both represent a single bond, because then a harder antifouling film can be formed.

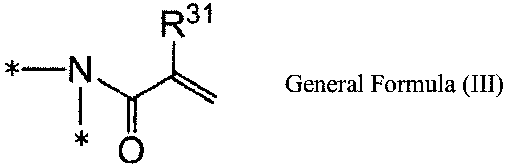

In General Formula (III), R³¹ represents a hydrogen atom or a methyl group, and * represents a binding site. Generally, a carbon atom is positioned at the binding site represented by *.

Specific examples (b-1) to (b-5) of the compound represented by General Formula (I) or General Formula (II) will be shown below, but the present embodiment is not limited to the following specific examples.

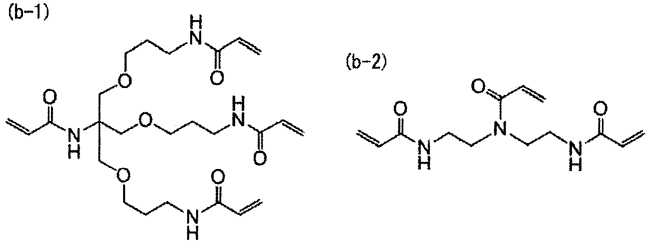

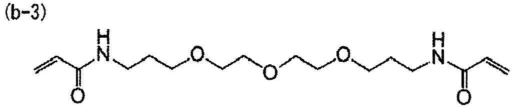

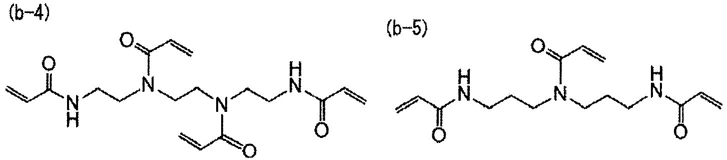

As the compound represented by General Formula (I) or General Formula (II), the compounds obtained by synthesis or various commercial products may be used. The compound represented by General Formula (I) or General Formula (II) can be synthesized by the synthesis method described in technical disclosure No. 013-502654.

The polymer (b) may have only one kind of partial structure derived from a polyfunctional (meth)acrylamide compound or two or more kinds of partial structures derived from a polyfunctional (meth)acrylamide.

Specifically, examples of the partial structure derived from a polyfunctional (meth)acrylamide compound include a structure obtained by removing one hydrogen atom from a terminal double bond included in the polyfunctional (meth)acrylamide compound. As the polymer (b), an aspect is preferable in which a betaine monomer, which will be described later, is added to a site at which one hydrogen atom is removed from a terminal double bond of the polyfunctional (meth)acrylamide compound.

In a case where the polymer (b) is synthesized, it is preferable to use a composition for synthesizing the polymer (b) containing a polyfunctional (meth)acrylamide compound, a betaine monomer which will be described later, and a polymerization initiator. In the composition for synthesizing the polymer (b), the content of the polyfunctional (meth)acrylamide compound with respect to the total solid content of the composition is preferably equal to or greater than 10% by mass and less than 90% by mass, and more preferably 20% by mass to 80% by mass.

In the present embodiment, as a preferred aspect of the polymer (b), an aspect can be exemplified in which a structural unit derived from at least one kind of betaine monomer selected from the group consisting of a compound represented by General Formula (IV) shown below and a compound represented by General Formula (V) shown below is added to a terminal double bond of the aforementioned polyfunctional (meth)acrylamide compound. In a case where the polymer (b) has the structural unit derived from a betaine monomer, the hydrophilicity of the polymer (b) is further improved, and hence the hydrophilicity of the antifouling film containing the polymer (b) is further improved.

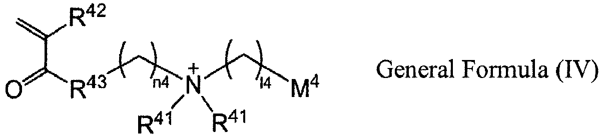

In General Formula (IV), R⁴¹ represents a methyl group, an ethyl group, a n-propyl group, or an i-propyl group, and is preferably a methyl group.

A plurality of R⁴¹'s may be the same as or different from each other. It is preferable that R⁴¹'s are the same as each other, because then the compound can be easily synthesized.

R⁴² represents a hydrogen atom or a methyl group, and R⁴³ represents -NH- or -O-.

M⁴ represents -SO₃⁻ or -COO⁻.

n4 represents an integer of 1 to 4. In a case where n4 is within a range of 1 to 4, the alkylene chain length falls into a suitable range, and the solubility of the betaine monomer in a solvent becomes excellent. From the viewpoint of the solubility of the compound represented by General Formula (IV) in a solvent, in a case where M⁴ in General Formula (IV) represents -SO₃⁻, n4 is more preferably 3. In a case where M⁴ in General Formula (IV) represents -COO⁻, n4 is more preferably 2.

14 represents an integer of 1 to 4. 14 is an integer of 1 to 4. In a case where 14 is within a range of 1 to 4, the alkylene chain length falls into a suitable range, and the solubility of the compound represented by General Formula (IV) in a solvent becomes excellent. From the viewpoint of the solubility in a solvent, in a case where M⁴ in General Formula (IV) represents -SO₃⁻, 14 is more preferably 4. In a case where M⁴ in General Formula (IV) represents -COO⁻, likewise, from the viewpoint of the solubility in a solvent, 14 is more preferably 1.

In a case where M⁴ represents -SO₃⁻, the compound represented by General Formula (IV) becomes a sulfobetaine monomer. In a case where M⁴ represents -COO₃⁻, the compound represented by General Formula (IV) becomes a carboxybetaine monomer.

In a case where M⁴ in General Formula (IV) is -SO₃⁻, likewise, from the viewpoint of the solubility in a solvent, R⁴³ is preferably -NH-.

In a case where M⁴ in General Formula (IV) is -COO⁻, likewise, from the viewpoint of the solubility in a solvent, R⁴³ is preferably -O-.

Specific examples (b-i) and (b-ii) preferred as the compound represented by General Formula (IV) will be shown below, but the present embodiment is not limited to the following specific examples.

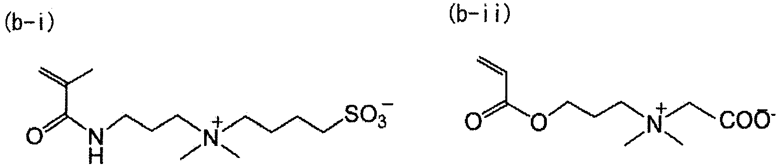

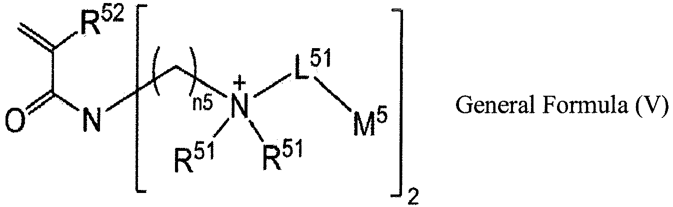

In General Formula (V), R⁵¹ represents a methyl group, an ethyl group, a n-propyl group, or an i-propyl group, and a plurality of R⁵¹'s may be the same as or different from each other.

It is preferable that R⁵¹'s are the same substituents, because then the compound represented by General Formula (V) can be easily synthesized. Particularly, R⁵¹ is more preferably a methyl group. The partial structures shown in the square bracket in General Formula (V) may be the same as or different from each other. However, from the viewpoint of ease of synthesis, it is preferable that the partial structures are the same as each other.

R⁵² represents a hydrogen atom or a methyl group.

n5 represents an integer of 1 to 4. In a case where n5 is within a range of 1 to 4, the alkylene chain length falls into a suitable range, and the solubility of the compound represented by General Formula (IV) in a solvent becomes excellent. From the viewpoint of the solubility in a solvent, in a case where M⁵ in General Formula (V) is -SO₃⁻, n5 is more preferably 3. In a case where M⁵ in General Formula (V) is -COO⁻, n5 is more preferably 1 or 2.

L⁵¹ represents a linear or branched alkylene group having 3 or 4 carbon atoms. Specifically, examples of L⁵¹ include structures represented by Formulae (L1) to (L5) shown below. In the following structures, * represents a linking site.

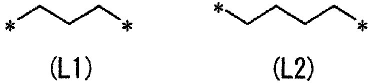

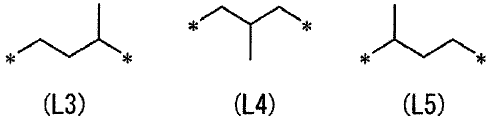

M⁵ represents -SO₃⁻ or -COO⁻. In a case where M⁵ is -SO₃⁻, the betaine monomer becomes a sulfobetaine monomer. In a case where M⁵ is -COO⁻, the betaine monomer becomes a carboxybetaine monomer.

A specific example (b-iii) preferred as the compound represented by General Formula (V) will be shown below, but the present embodiment is not limited to the following specific example.

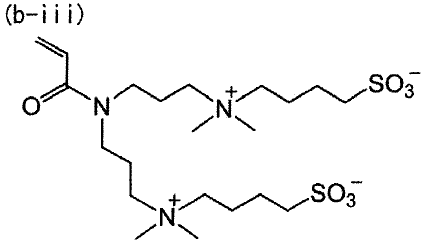

In the present embodiment, the betaine monomer which can be used for synthesizing the polymer (b) can be synthesized by a common method. Regarding the betaine monomer, for example, the synthesis examples or the example compounds disclosed in JP2012-187907A, JP2012-31400A, and the like can be referred to. Specifically, by reacting a predetermined polyamine compound with a (meth)acrylic acid chloride compound, a (meth)acrylamide compound containing an amino group is obtained. By reacting the obtained (meth)acrylamide compound containing an amino group with a sultone compound having a predetermined number of carbon atoms, a compound having a sulfobetaine structure can be obtained. Specifically, regarding the synthesis method, for example, the description in paragraphs "0189" to "0193" in JP2012-31400A can be referred to.

The polymer (b) may have one kind of structural unit derived from a betaine monomer or two or more kinds of structural units derived from a betaine monomer.

In the polymer (b), from the viewpoint of further improving the aforementioned effects of the antifouling film, a mass ratio between the partial structure derived from a polyfunctional (meth)acrylamide compound and the structural unit derived from a betaine monomer (polyfunctional (meth)acrylamide compound:betaine monomer) is preferably 10:90 to 90:10 and more preferably 10:90 to 50:50.

The total content of the polyfunctional (meth)acrylamide compound and the betaine monomer, which are contained as a raw material components in the composition for forming an antifouling film used for forming the antifouling film, with respect to the solid contents of the composition is preferably equal to or greater than 80% by mass, and more preferably 90% by mass to 99% by mass.

### (Other monomers)

As long as the effects of the present invention are not impaired, the polymer (b) may have, as a structural unit the polymer (b) has on the terminal of the partial structure derived from the aforementioned polyfunctional (meth)acrylamide compound, structural units derived from other monomers different from the aforementioned monomers, in addition to the structural unit derived from a betaine monomer.

In a case where the polymer (b) has structural units derived from other monomers that the polymer (b) can have if desired, the polymer (b) may have only one kind of structural unit derived from other monomers or two or more kinds of structural units derived from other monomers.

The content of the polymer (b) with respect to the total solid content of the antifouling film is preferably 0.1% by mass to 90% by mass, and more preferably 1% by mass to 75% by mass.

### -Polymer (c)-

The antifouling film in the present disclosure contains a polymer (c) having an acrylamide structure and a hydrocarbon group having 2 to 20 carbon atoms.

Because the polymer (c) has a hydrophilic acrylamide structure and a hydrophobic hydrocarbon group having 2 to 20 carbon atoms in a molecule, appropriate hydrophobicity is imparted to the antifouling film.

Examples of the hydrocarbon group having 2 to 20 carbon atoms include a linear, branched, or cyclic alkyl group, alkylene group, arylene group, aralkylene group, or the like. Among these, a linear, branched, or cyclic alkyl group is preferable, because this alkyl group enables antifogging properties and antifouling properties to be compatible with each other in a well-balanced manner.

More specifically, as the polymer (c), a polymer having a structural unit represented by General Formula (1) shown below and a structural unit represented by General Formula (2) shown below is preferable.

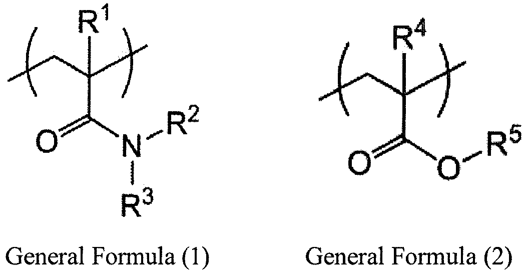

In General Formula (1) and General Formula (2), R¹ and R⁴ each independently represent a hydrogen atom or a methyl group.

R² and R³ each independently represent a hydrogen atom, a methyl group, or an ethyl group. R² and R³ preferably each represent a hydrogen atom or a methyl group. From the viewpoint of further improving water solubility, it is more preferable that R² and R³ both represent a hydrogen atom.

R⁵ represents an alkyl group having 2 or more carbon atoms or a substituent represented by General Formula (3) shown below.

In a case where R⁵ represents an alkyl group having 2 or more carbon atoms, the alkyl group may be any of a linear alkyl group, an alkyl group having a branch, and a cyclic alkyl group. Furthermore, the alkyl group may be an unsubstituted alkyl group or a substituted alkyl group having an aromatic ring or a heterocyclic ring as a substituent.

More specifically, examples of the alkyl group include an alkyl group having 2 to 20 carbon atoms that is exemplified above in the description of the hydrocarbon group having 2 to 20 carbon atoms contained in the polymer (c), for example, a linear or branched alkyl group such as an ethyl group, a propyl group, a propylene group, a n-butyl group, an i-butyl group, or a t-butyl group, and a cyclic alkyl group such as a cyclopropyl group, a cyclobutyl group, a cyclopentyl group, or a cyclohexyl group.

Among these, as R⁵, a linear, branched, or cyclic unsubstituted alkyl group having 2 to 8 carbon atoms or a substituent represented by General Formula (3) shown below is preferable. Furthermore, a branched alkyl group having 2 to 8 carbon atoms is more preferable, because this alkyl group can impart better hydrophobicity to the antifouling film. The number of carbon atoms in the alkyl group is preferably 2 to 6. From the viewpoint of further improving the balance between hydrophobicity and hydrophilicity, an alkyl group having 3 or 4 carbon atoms is most preferable.

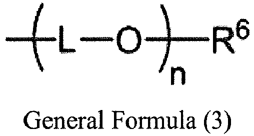

In General Formula (3), L represents an alkylene group having 2 to 6 carbon atoms, and R⁶ represents an unsubstituted alkyl group having 4 or more carbon atoms or an aromatic group-substituted alkyl group. n represents the average number of moles of polyether added and is 2 to 4.

In a case where R⁵ is a substituent represented by General Formula (3), the content of the structural unit represented by General Formula (2) having the substituent represented by General Formula (3) with respect to all the structural units included in the polymer (c) is preferably equal to or smaller than 70 mol%, and more preferably within a range of 5 mol% to 60 mol%.

Preferred examples of the combination of the repeating units represented by each of General Formula (1) and General Formula (2) include a combination in which R¹ and R⁴ in General Formula (1) and General Formula (2) both represent a hydrogen atom, and a combination in which R² and R³ in General Formula (1) both represent a hydrogen atom and R⁵ in General Formula (2) represents a branched unsubstituted alkyl group having 3 or 4 carbon atoms.

It is preferable that the polymer (c) does not contain a group selected from the group consisting of a hydroxy group, a carboxylic acid group, a phosphoric acid group, a phosphonic acid group, and salts of these in a molecule, because then the desired hydrophobicity is easily imparted to the antifouling film.

Specific examples of monomers from which the structural unit represented by General Formula (1) is derived include acrylamide, methacrylamide, N-methylacrylamide, N-methylmethacrylamide, N-ethylacrylamide, N-ethylmethacrylamide, N,N-dimethylacrylamide, N,N-dimethylmethacrylamide, N,N-diethylacrylamide, N,N-diethylmethacrylamide, N,N-ethylmethylacrylamide, N,N-ethylmethylmethacrylamide, and the like.

Specific examples of monomers from which the structural unit represented by General Formula (2) is derived include methyl acrylate, ethyl acrylate, propyl acrylate, isopropyl acrylate, n-butyl acrylate, i-butyl acrylate, t-butyl acrylate, pentyl acrylate, hexyl acrylate, cyclohexyl acrylate, heptyl acrylate, octyl acrylate, 2-ethylhexyl acrylate, nonyl acrylate, decanyl acrylate, methyl methacrylate, ethyl methacrylate, propyl methacrylate, isopropyl methacrylate, n-butyl methacrylate, i-butyl methacrylate, t-butyl methacrylate, pentyl methacrylate, hexyl methacrylate, cyclohexyl methacrylate, heptyl methacrylate, octyl methacrylate, 2-ethylhexyl methacrylate, nonyl methacrylate, decanyl methacrylate, and the like.

The polymer (c) is preferably a polymer having the structural unit represented by General Formula (1) in an amount of 70 mol% to 95 mol% and the structural unit represented by General Formula (2) in an amount of 5 mol% to 30 mol%, more preferably a polymer having the structural unit represented by General Formula (1) in an amount of 70 mol% to 80 mol% and the structural unit represented by General Formula (2) in an amount of 20 mol% to 30 mol%, and even more preferably a polymer having the structural unit represented by General Formula (1) in an amount of 75 mol% to 80 mol% and the structural unit represented by General Formula (2) in an amount of 20 mol% to 25 mol%.

As long as the effects of the present invention are not impaired, the polymer (c) can have, in addition to the structural unit represented by General Formula (1) and the structural unit represented by General Formula (2) described above, other structural units different from the structural unit represented by General Formula (1) and the structural unit represented by General Formula (2) according to the purpose.

In a case where the polymer (c) has other structural units, the physical properties, the molecular weight, and the like of the polymer (c) can be adjusted.

The polymer (c) can have a structural unit represented by General Formula (4) as other structural units.

In a case where the polymer (c) has the structural unit represented by General Formula (4), the content of the structural unit with respect to all the structural units included in the polymer (c) is preferably 0.3 mol% to 5.0 mol%, and more preferably 0.5 mol% to 2 mol%. 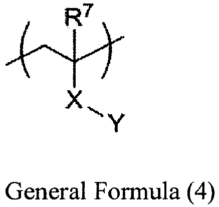 A group:

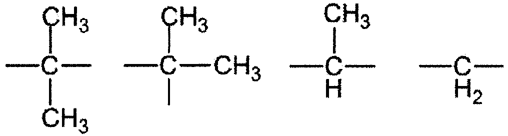

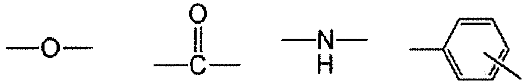

In General Formula (4), R⁷ represents a hydrogen atom or a methyl group. X represents a single bond or a divalent linking group constituted with at least one group selected from the group consisting of divalent linking groups shown in A group.

Y represents a carboxylic acid group, a carboxylate group, a sulfonic acid group, a sulfonate group, a phosphoric acid group, a phosphate group, a phosphonic acid group, a phosphonate group, a hydroxy group, a carbobetaine group, a sulfobetaine group, an ammonium group, or a substituent represented by General Formula (3) shown below.

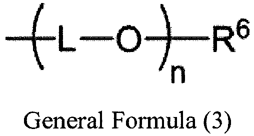

The substituent represented by General Formula (3) has the same definition as the substituent represented by General Formula (3) described regarding General Formula (2), and preferred examples thereof are also the same.

The polymer (c) will be shown below by using the structural units [(c-1) to (c-5)] in the polymer (c), but the polymer (c) in the present disclosure is not limited to the specific examples shown below. a, b, and c shown in each of the structural units represent the content (mol%) of each of the structural units in the polymer (c). a is preferably within a range of 50 to 95, b is preferably within a range of 5 to 75, and c is preferably within a range of 0.1 to 10. The sum of a, b, and c equals 100 mol%.

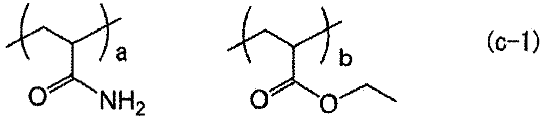

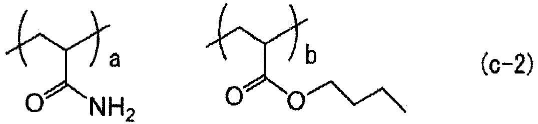

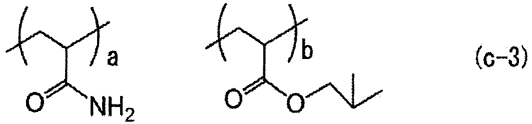

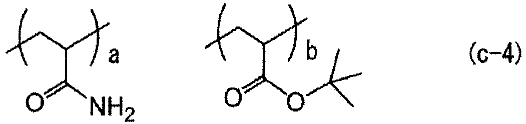

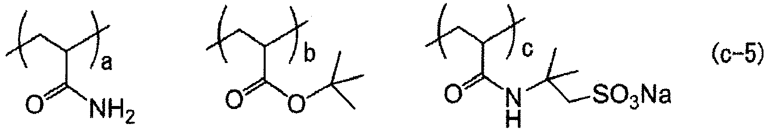

The polymer (c) can be synthesized by the method described in JP2012-73597A. Furthermore, the example compounds of hydrophilic polymers described in paragraphs '0027" to "0035" in JP2012-73597A can be suitably used as the polymer (c) in the present embodiment.

The weight-average molecular weight (Mw) of the polymer (c) is preferably 10,000 to 200,000, more preferably 10,000 to 100,000, and most preferably 10,000 to 30,000.

The weight-average molecular weight (Mw) of the polymer (c) can be measured by the method described below.

The weight-average molecular weight of the polymer (c) can be measured by gel permeation chromatography (GPC).

Specifically, the weight-average molecular weight can be measured using HLC-8120GPC and SC-8020 (manufactured by Tosoh Corporation), two columns of TSKgel, SuperHM-H (manufactured by Tosoh Corporation, 6.0 mmID × 15 cm), and tetrahydrofuran (THF) as an eluent. Furthermore, the weight-average molecular weight can be measured using a differential refractometer (RI) detector under the conditions of a sample concentration of 0.5% by mass, a flow rate of 0.6 ml (milliliter)/min, a sample injection amount of 10 µl (microliter), and a measurement temperature of 40°C.

As a calibration curve, it is possible to use a calibration curve prepared from 10 samples of "polystyrene standard sample TSK standard" manufactured by Tosoh Corporation: "A-500", "F-1", "F-10", "F-80", "F-380", "A-2500", "F-4", "F-40", "F-128", and "F-700".

The content of the polymer (c) with respect to the total solid content of the antifouling film is preferably 0.1% by mass to 90% by mass, and more preferably 1% by mass to 75% by mass.

### -Other components-

If necessary, the antifouling film of the present embodiment can further contain, in addition to the components described above, binder components (hereinafter, referred to as other binder components in some cases) other than the polymer (b) and the polymer (c) and an additive such as a preservative as other components.

Examples of other binder components include a siloxane binder, polyurethane, an acryl resin (hereinafter, referred to as an acrylic resin in some cases) including at least a structural unit derived from an acryl monomer, and a binder component such as polyphosphate or metaphosphate having a polar group (for example, a hydroxyl group, a carboxy group, a phosphoric acid group, a sulfonic acid group, an amino group or the like) on a terminal thereof.

Provided that the antifouling film contains another binder components, in a case where the antifouling film is provided on a base material, the adhesiveness between the antifouling film and the base material (particularly, a polycarbonate base material) is further improved.

Among other binder components, from the viewpoint of further improving the adhesiveness between the antifouling film and a base material, a binder component having a hydroxyl group, a carboxy group, or a phosphoric acid group on a terminal thereof is preferable, and polyurethane, an acrylic resin, and polyphosphate are more preferable.

The polyurethane is not particularly limited, and examples thereof include polyurethane having a soft segment/hard segment structure constituted with a polyol skeleton and a polyisocyanate skeleton, and the like.

As the polyurethane, commercial products may be used, and examples thereof include a TAKELAC (registered trademark) W series, a TAKELAC WS series, and a TAKELAC WD series manufactured by Mitsui Chemicals, Inc., a PERMARIN (registered trademark) series, a UCOAT (registered trademark) series, and a UPRENE (registered trademark) series manufactured by Sanyo Chemical Industries, Ltd., and the like.

Examples of the acrylic resin include a homopolymer of an acrylic acid (polyacrylic acid), an acrylic acid, an acrylic acid derivative such as an acrylic acid ester, a methacrylic acid derivative such as methyl methacrylate, and the like.

Among the aforementioned acrylic resins, a polyacrylic acid is preferable. The weight-average molecular weight of the polyacrylic acid is preferably 2,000 to 5,000,000, more preferably 10,000 to 2,000,000, and even more preferably 250,000 to 1,000,000.

Examples of the polyphosphate include sodium polyphosphate, potassium polyphosphate, and the like.

In a case where the antifouling film contains other binders, the content rate of other binders with respect to the total solid content of the antifouling film is preferably 0.001% by mass to 0.1% by mass, more preferably 0.001% by mass to 0.01% by mass, and even more preferably 0.002% by mass to 0.008% by mass. In a case where the content rate of other binders is within the above range, it is easy to form an antifouling film that exhibits better adhesiveness with respect to a base material.

In a case where a composition for forming an antifouling film containing other binders is prepared, the content rate of other binders in the composition with respect to the total solid content of the composition is preferably 0.001% by mass to 0.1% by mass, more preferably 0.001% by mass to 0.01% by mass, and even more preferably 0.002% by mass to 0.008% by mass.

As long as the antifouling film in the present disclosure contains the particles (a), the polymer (b), and the polymer (c), the aspect relating to how each of the components is contained in the antifouling film is not particularly limited.

From the viewpoint of the effects, an aspect is preferable in which the antifouling film has the polymer (b) and the polymer (c) in at least a portion of the surface of the antifouling film. In a case where the antifouling film has the polymer (b) and the polymer (c) in at least a portion of the surface thereof, the antifouling film exhibits excellent antifouling properties and antifogging properties and becomes a film having excellent self-cleaning properties.

In the antifouling film containing the polymer (b) and the polymer (c), a pure water contact angle of the surface thereof is preferably equal to or smaller than 10°. The pure water contact angle of the antifouling film surface is more preferably equal to or smaller than 8°.

The pure water contact angle of the antifouling film surface can be measured using a contact angle meter M553G-XM (Shiro Industry Co.). 1 µl of pure water is added dropwise to the surface of the antifouling film, and by using the contact angle meter M553G-XM, a contact angle [°] is measured by a θ/2 method. The average of values obtained by measuring the contact angle five times is taken as a pure water contact angle in the present specification.

As an aspect in which the antifouling film contains the polymer (b) and the polymer (c), an aspect can be exemplified in which the antifouling film contains the polymer (b) and the polymer (c) as binders in a case where the antifouling film containing the particles (a) is formed. In a case where the polymer (b) and the polymer (c) are used as binders, at least one kind of polymer between the polymer (b) and the polymer (c) is present between the silica particles (a) adjacent to each other, and by at least one kind of polymer between the polymer (b) and the polymer (c), the particles (a) adjacent to each other are fixed to each other.

As another aspect, an aspect can be exemplified in which a film containing the particles (a) is formed using the silica particles (a) and other binders different from the polymer (b) and the polymer (c) and then the polymer (b) and the polymer (c) are imparted to the surface of the film. In this aspect, the antifouling film has the polymer (b) and the polymer (c) only in the vicinity of the surface thereof.

As other binders used for forming the film containing the particles (a), a siloxane binder is preferable because this binder improves the film hardness.

Hereinafter, the siloxane binder as one of other binders preferably used for fixing the silica particles (a) will be described. In the present embodiment, a layer containing the particles (a) and the siloxane binder is formed, and then the polymer (b) and the polymer (c) described above are imparted to the surface of the layer so as to form an antifouling film. Therefore, the layer containing the silica particles (a) and the siloxane binder will be referred to as "antifouling film precursor" in some cases.

### -Siloxane binder-

It is preferable that the siloxane binder, which is one of other binders being able to be used for forming the layer containing the particles (a), contains at least one kind of siloxane binder formed of a compound (hereinafter, referred to as "specific siloxane compound" as well) represented by General Formula (5).

The specific siloxane compound is a siloxane oligomer. The siloxane binder in the present disclosure is a compound obtained by subjecting the specific siloxane compound (siloxane oligomer) represented by General Formula (5) shown below to a condensation reaction. In a case where the antifouling film precursor contains the siloxane binder, the hydrophilicity of the surface of the antifouling film precursor can be improved.

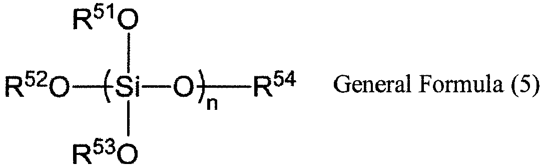

In General Formula (5), R⁵¹, R⁵², R⁵³, and R⁵⁴ each independently represent a monovalent organic group having 1 to 6 carbon atoms. n represents an integer of 2 to 20.

The organic group having 1 to 6 carbon atoms represented by R⁵¹, R⁵², R⁵³, and R⁵⁴ may be a linear, branched, or cyclic. Examples of the monovalent organic group include an alkyl group, an alkenyl group, and the like. Among these, an alkyl group is preferable.

In a case where R⁵¹, R⁵², R⁵³, and R⁵⁴ represent an alkyl group, examples of the alkyl group include a methyl group, an ethyl group, a propyl group, an isopropyl group, a n-butyl group, a tert-butyl group, a n-pentyl group, a n-hexyl group, a cyclohexyl group, and the like.

In a case where the organic group, which is preferably an alkyl group, represented by R⁵¹ to R⁵⁴ in the specific siloxane compound has 1 to 6 carbon atoms, the hydrolyzability of the siloxane oligomer becomes excellent. From the viewpoint of further improving the hydrolyzability, R⁵¹ to R⁵⁴ more preferably each independently represent an alkyl group having 1 to 4 carbon atoms, and even more preferably each independently represent an alkyl group having 1 or 2 carbon atoms.

n in General Formula (5) represents an integer of 2 to 20. In a case where n is within a range of 2 to 20, the viscosity of a coating solution for forming the antifouling film precursor containing the specific siloxane compound can be made fall into an appropriate range. Furthermore, the reactivity of the siloxane oligomer can be controlled to be within a preferred range. n is preferably 3 to 12, and more preferably 5 to 10.

In a case where n is equal to or smaller than 20, the viscosity of the coating solution does not become too high, and the handleability becomes excellent, and the coating solution is excellent uniformly applied in a case where the antifouling film precursor is formed by coating. In contrast, in a case where n is equal to or greater than 2, it is easy to control the reactivity of the siloxane compound, and for example, an antifouling layer with a surface having excellent hydrophilicity can be formed by coating.

Hereinafter, examples of the specific siloxane compound will be described using R⁵¹ to R⁵⁴ and n in General Formula (5), but the present disclosure is not limited to those example compounds.

| Specific siloxane compound | R⁵¹ | R⁵² | R⁵³ | R⁵⁴ | n |
|---|---|---|---|---|---|
| Compound 1 | Methyl group | Methyl group | Methyl group | Methyl group | 5 |
| Compound 2 | Methyl group | Methyl group | Methyl group | Methyl group | 10 |
| Compound 3 | Ethyl group | Ethyl group | Ethyl group | Ethyl group | 5 |
| Compound 4 | Ethyl group | Ethyl group | Ethyl group | Ethyl group | 10 |

The weight-average molecular weight (Mw) of the specific siloxane compound (siloxane oligomer) is preferably within a range of 300 to 1,500, and more preferably within a range of 500 to 1,200.

In a case where the specific siloxane compound coexists with water, at least a portion thereof is hydrolyzed. By the reaction between the siloxane oligomer and water, at least some of OR⁵¹, OR⁵², OR⁵³, and OR⁵⁴ bonded to silicon atoms of the specific siloxane compound are substituted with a hydroxy group, and as a result, a compound is obtained which is a hydrolysate of the specific siloxane compound. Presumably, due to the hydroxy group which is a hydrophilic group, the surface hydrophilicity of the antifouling layer formed through, for example, coating and drying becomes excellent.

During hydrolysis reaction, it is not necessary for all the alkoxy groups included in the specific siloxane compound to react. However, for example, from the viewpoint of further improving the hydrophilicity of a coating film obtained by coating and drying the coating solution for forming an antifouling layer, it is preferable that more alkoxy groups are hydrolyzed.

The amount of water required during hydrolysis equals the molar amount of the alkoxy group included in the specific siloxane compound. From the viewpoint of causing the hydrolysis reaction to efficiently proceed, it is preferable that a large excess of water is present in the reaction system.

Although the hydrolysis reaction of the specific siloxane compound proceeds at room temperature (25°C), in order to accelerate the reaction, after a mixture is prepared by bringing the specific siloxane compound into contact with water, the obtained mixture may be heated to about 30°C to 50°C. The longer the reaction time of the hydrolysis reaction, the more preferable, because the reaction proceeds further. Therefore, from the viewpoint of causing the hydrolysis reaction to sufficiently proceed, it is also preferable that the reaction is performed for 1 hour to 36 hours in a heating state. In addition, by allowing a catalyst, which will be described later, accelerating the hydrolysis reaction of the specific siloxane compound to coexist with the mixture, it is possible to obtain a hydrolysate of the specific siloxane compound necessary for hydrophilicity in about half a day.

The hydrolysis reaction is a reversible reaction. Therefore, in a case where water is removed from the mixture, a condensation reaction starts to occur between hydroxy groups in the hydrolysate of the siloxane oligomer and proceeds. Accordingly, in a case where the hydrolysate of the specific siloxane compound is obtained by causing the hydrolysis reaction in the mixture containing the specific siloxane compound and preferably a large excess of water, it is preferable to use the mixture (solution) as it is for preparing a coating solution for forming the antifouling film precursor without isolating the hydrolysate.

Regarding the siloxane binder contained in the antifouling film precursor, a coating solution for forming the antifouling film precursor containing the specific siloxane compound (siloxane oligomer) is prepared, the prepared coating solution is applied to a base material and dried such that at least some of the hydroxy groups contained in the hydrolysate of the siloxane oligomer are bonded to each other, and in this way, the antifouling film precursor containing a siloxane binder formed by the condensation of the siloxane oligomer is obtained.

The antifouling film precursor may contain only one kind of siloxane binder or two or more kinds of siloxane binders.

The content rate of the specific siloxane binder in the antifouling film precursor with respect to the total solid content of the antifouling film precursor is preferably 5% by mass to 95% by mass, and more preferably 10% by mass to 80% by mass. In a case where the content rate of the siloxane binder is within the above range, the hydrophilicity of the surface of the antifouling film precursor becomes excellent.

In a case where the coating solution for forming the antifouling film precursor is prepared, the content rate of the specific siloxane compound (siloxane oligomer) represented by General Formula (5) in the coating solution with respect to the total mass of the coating solution for forming the antifouling film precursor is preferably 0.3% by mass to 70% by mass, more preferably 0.5% by mass to 60% by mass, and even more preferably 1% by mass to 50% by mass.

The amount of the polymer (b) and the polymer (c) imparted to the surface of the obtained antifouling film precursor is appropriately selected according to the purpose. From the viewpoint of the effects, the total amount of the polymer (b) and the polymer (c) is preferably set such that the film thickness becomes 0.001 µm to 1 µm after drying, and more preferably set such that the film thickness becomes 0.005 µm to 0.5 µm after drying.

Because the antifouling film of the present embodiment contains the polymer (b) and the polymer (c) as described above, suitable hydrophilicity and hydrophobicity are well-balanced, and the antifouling properties, the antifogging properties, and the self-cleaning properties become compatible with each other.

As another embodiment of the present invention, the inventor of the present invention has found that in a case where one polymer having both the structure of the polymer (b) and the structure of the polymer (c) is used, the same effect as in the case where the polymer (b) and the polymer (c) are used in combination is brought about.

### -Polymer (d)-

The antifouling film according to another embodiment is an antifouling film containing the silica particles (a) and a polymer (d) which has an acrylamide structure and has, in a molecule, at least one substituent selected from the group consisting of -SO₃M and -COOM and a hydrocarbon group having 2 to 20 carbon atoms. M represents a hydrogen atom or represents an atom or an atomic group which can become a cation by being dissociated.

More specifically, the polymer (d) is preferably a polymer to which a partial structure, including a structural unit that is derived from at least one kind of betaine monomer selected from the group consisting of a compound represented by General Formula (IV) shown below and a compound represented by General Formula (V) shown below and a structural unit that is represented by General Formula (2) shown below, is added.

As another specific example, an aspect can be exemplified in which the polymer (d) is a polymer obtained by adding a partial structure including a structural unit that is derived from at least one kind of betaine monomer selected from the group consisting of a compound represented by General Formula (IV) shown below and a compound represented by General Formula (V) shown below and a structural unit that is represented by General Formula (2) shown below to all the terminals represented by STAR mark of at least one kind of polyfunctional (meth)acrylamide compound selected from the group consisting of a compound represented by General Formula (I-2) shown below and a compound represented by General Formula (II-2) shown below.

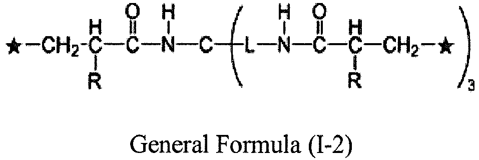

In General Formula (I-2), R represents a hydrogen atom or a methyl group, and a plurality of R's may be the same as or different from each other. L represents -O-, an alkylene group having 2 to 4 carbon atoms, or a divalent linking group obtained by combining -O- and an alkylene group having 2 to 4 carbon atoms. STAR mark represents a site to which a partial structure including a structural unit that is derived from at least one kind of betaine monomer selected from the group consisting of the compounds represented by General Formula (IV) and General Formula (V) and a structural unit that is represented by General Formula (2) is added.

R in General Formula (I-2) has the same definition as R in General Formula (I), and preferred examples thereof are also the same.

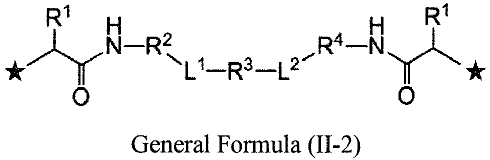

In General Formula (II-2), R¹ represents a hydrogen atom or a methyl group, and a plurality of R¹'s may be the same as or different from each other. R² and R⁴ each independently represent -O-, an alkylene group having 1 to 4 carbon atoms, or a divalent linking group obtained by combining -O- and an alkylene group having 1 to 4 carbon atoms, R³ represents -O-, an alkylene group having 1 to 4 carbon atoms, a group represented by General Formula (III-2) shown below, or a divalent linking group obtained by combining two or more groups selected from -O-, an alkylene group having 1 to 4 carbon atoms, and a group represented by General Formula (III-2) shown below, and L¹ and L² each independently represent a single bond or a group represented by General Formula (III-2) shown below. STAR mark represents a site to which a partial structure including a structural unit that is derived from at least one kind of betaine monomer selected from the group consisting of compounds represented by General Formula (IV) and General Formula (V) and a structural unit that is represented by General Formula (2) is added.

R¹, R², R⁴, L¹, and L² in General Formula (II-2) have the same definitions as R¹, R², R⁴, L¹, and L² in General Formula (II), and preferred examples thereof are also the same.

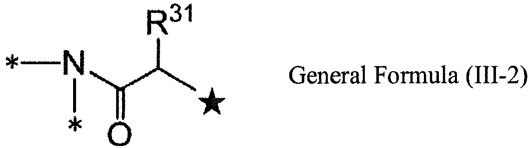

In General Formula (III-2), R³¹ represents a hydrogen atom or a methyl group, * represents a site bonded to the compound represented by General Formula (II-2), and STAR mark represents a site to which a partial structure including a structural unit derived from at least one kind of betaine monomer selected from the group consisting of the compounds represented by General Formula (IV) and General Formula (V) and the structural unit that is represented by General Formula (2) is added.

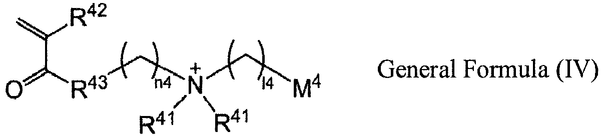

In General Formula (IV), R⁴¹ represents a methyl group, an ethyl group, a n-propyl group, or an i-propyl group, and a plurality of R⁴¹'s may be the same as or different from each other.

R⁴² represents a hydrogen atom or a methyl group, and R⁴³ represents -NH- or -O-. n4 represents an integer of 1 to 4. 14 represents an integer of 1 to 4. M⁴ represents -SO₃⁻ or -COO⁻.

R⁴¹, R⁴², R⁴³, n4, 14, and M⁴ in General Formula (IV) are as described above, and preferred examples thereof are as described above as well.

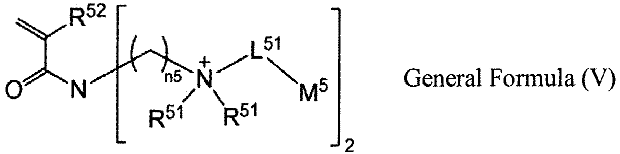

In General Formula (V), R⁵¹ represents a methyl group, an ethyl group, a n-propyl group, or an i-propyl group, and a plurality of R⁵¹'s may be the same as or different from each other.

R⁵² represents a hydrogen atom or a methyl group. n5 represents an integer of 1 to 4. L⁵¹ represents a linear or branched alkylene group having 3 or 4 carbon atoms. M⁵ represents -SO₃⁻ or -COO⁻.

R⁵¹, R⁵², R⁵³, n5, and M⁵ in General Formula (V) are as described above, and preferred examples thereof are as described above as well.

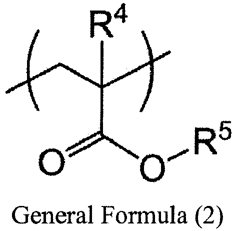

In General Formula (2), R⁴ represents a hydrogen atom or a methyl group. R⁵ represents a linear, branched, or cyclic unsubstituted alkyl group having 2 or more carbon atoms, a substituted alkyl group which may have an aromatic ring or a heterocyclic ring as a substituent, or a substituent represented by General Formula (3) shown below. In a case where R⁵ is a substituent represented by General Formula (3) shown below, a content of the structural unit represented by General Formula (2) having the substituent represented by General Formula (3) with respect to all the structural units included in the polymer (d) is preferably equal to or smaller than 70 mol%.

R⁴ and R⁵ in General Formula (2) are as described above, and preferred examples thereof are as described above as well.

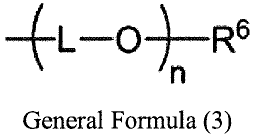

In General Formula (3), L represents an alkylene group having 2 to 6 carbon atoms, and R⁶ represents an unsubstituted alkyl group having 4 or more carbon atoms or an aromatic group-substituted alkyl group. n represents the average number of moles of polyether added and is 2 to 4.

L, R⁶, and n in General Formula (3) are as described above, and preferred examples thereof are as described above as well.

Specific examples of the polymer (d) include the following compounds, but the polymer (d) in the present disclosure is not limited to the specific examples shown below.

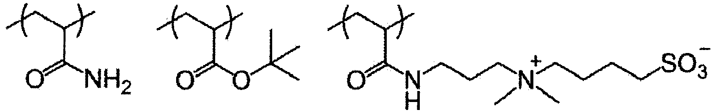

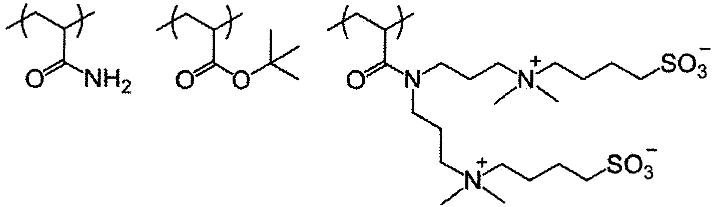

The polymer (d) described above can be synthesized, for example, using at least one kind of betaine monomer that is selected from the group consisting of a compound represented by General Formula (IV) and a compound represented by General Formula (V) and a composition that contains a monomer being able to form a structural unit represented by General Formula (2), in the same manner as that used for synthesizing the polymer (b).

Furthermore, the polymer (d) can be synthesized by incorporating at least one kind of polyfunctional (meth)acrylamide compound, which is selected from the group consisting of a compound represented by General Formula (I) and a compound represented by General Formula (II), into a betaine monomer and a monomer being able to form a structural unit represented by General Formula (2).

The balance between the hydrophilicity and the hydrophobicity of the polymer (d) can be adjusted, for example, by the type of the polyfunctional (meth)acrylamide compound and the content ratio between betaine monomer used for synthesis and the monomer being able to form a structural unit represented by General Formula (2).

The antifouling film may contain only one kind of polymer (d) or two or more kinds of polymers (d).

The content of the polymer (d) in the antifouling film with respect to the total solid content of the antifouling film is preferably within a range of 0.1% by mass to 90% by mass, and more preferably within a range of 1% by mass to 75% by mass.

The thickness of the antifouling film is preferably within a range of 20 nm to 600 nm, and more preferably within a range of 50 nm to 350 nm.

### <Composition for forming antifouling film>

The aforementioned antifouling film in the present disclosure can be formed using a composition for forming an antifouling film.

Examples of the composition for forming an antifouling film (hereinafter, simply referred to as "composition" in some cases) include compositions of aspects shown below.

Examples of the composition include an aspect in which the composition contains silica particles (a), a precursor of a polymer (b) having an acrylamide structure and at least one substituent selected from the group consisting of -SO₃M and -COOM, and a precursor of a polymer (c) having an acrylamide structure and a hydrocarbon group having 2 to 20 carbon atoms, and a polymerization initiator (e); an aspect in which the composition contains silica particles (a), a precursor of a polymer (b) having an acrylamide structure and at least one substituent selected from the group consisting of -SO₃M and -COOM, a polymer (c) having an acrylamide structure and a hydrocarbon group having at least 2 to 20 carbon atoms, and a polymerization initiator (e); an aspect in which the composition contains silica particles (a), a polymer (b) having an acrylamide structure and at least one substituent selected from the group consisting of -SO₃M and -COOM, a precursor of a polymer (c) having an acrylamide structure and a hydrocarbon group having 2 to 20 carbon atoms, and a polymerization initiator (e); and an aspect in which the composition contains silica particles (a), a polymer (b) having an acrylamide structure and at least one substituent selected from the group consisting of -SO₃M and -COOM, a polymer (c) having an acrylamide structure and a hydrocarbon group having 2 to 20 carbon atoms, and a solvent (f).

M represents a hydrogen atom or represents an atom or an atomic group which becomes a countercation by being dissociated.

Among these, from the viewpoint of ease of manufacturing, a composition is preferable which contains silica particles (a), a precursor of a polymer (b) having an acrylamide structure and at least one substituent selected from the group consisting of -SO₃M and -COOM, a polymer (c) having an acrylamide structure and a hydrocarbon group having 2 to 20 carbon atoms, and a polymerization initiator (e).

More specifically, a composition is preferable which preferably contains, as the precursor of the polymer (b), at least one kind of polyfunctional (meth)acrylamide compound which is selected from the group consisting of the compound represented by General Formula (I) and the compound represented by General Formula (II) described above and at least one kind of betaine monomer which is selected from the group consisting of the compound represented by General Formula (IV) and a compound represented by General Formula (V) shown below.

The polymer (c) may be contained as it is in the composition or may be contained in the composition in the form of a monomer as a precursor of the polymer (c). Particularly, from the viewpoint of ease of manufacturing, it is preferable that the polymer (c) is contained as it is in the composition.

In a case where the composition contains the precursor of the polymer, the composition further contains a polymerization initiator.

The polymerization initiator may be a thermal polymerization initiator or a photopolymerization initiator.

In a case where the composition contains a monomer compound as the polymer precursor and a polymerization initiator, by performing coating using the composition and applying energy which can activate the polymerization initiator, that is, by performing heating or light irradiation according to the type of the polymerization initiator, the composition is cured, and an antifouling film is formed.

Examples of the thermal polymerization initiator include an azo-based polymerization initiator, a persulfate-based polymerization initiator, a persulfuric acid substance-based polymerization initiator, a redox-based polymerization initiator, and the like.

As the thermal polymerization initiator, commercial products can be used. Examples of the commercial thermal polymerization initiators include VA-046B (trade name: manufactured by Wako Pure Chemical Industries, Ltd.) and the like.

Examples of the photopolymerization initiator include an alkynephenone-based photopolymerization initiator, a methoxyketone-based photopolymerization initiator, an acylphosphine oxide-based photopolymerization initiator, a hydroxyketone-based photopolymerization initiator (for example, 1,2-α-hydroxyalkylphenone or the like), an aminoketone-based photopolymerization initiator (for example, 2-methyl-1-[4-(methylthio)phenyl]-2-morpholino-propan-1-one), an oxime-based photopolymerization initiator, an oxyphenyl acetic acid ester-based photopolymerization initiator, an azo polymerization initiator, and the like.

As the photopolymerization initiator, commercial products may be used, and examples of the commercial products include VA-044 (trade name: azo-based polymerization initiator, manufactured by Wako Pure Chemical Industries, Ltd.), VA-061 (trade name: azo polymerization initiator, manufactured by Wako Pure Chemical Industries, Ltd.), VA-086 (trade name: azo polymerization initiator, manufactured by Wako Pure Chemical Industries, Ltd.), IRGACURE (registered trademark) 184 (1,2-α-hydroxyalkylphenone: hydroxyketone-based photopolymerization initiator), IRGACURE 907 (2-methyl-1-[4-(methylthio)phenyl]-2-morpholino-propan-1-one: aminoketone-based photopolymerization initiator), IRGACURE 754 (oxyphenyl acetic acid ester-based photopolymerization initiator), and the like. IRGACURE is a registered trademark of BASF SE.

The polymerization initiator may be water-soluble or oil-soluble. From the viewpoint of uniformity of the composition, it is preferable that the polymerization initiator is water-soluble.

In the composition, one kind of polymerization initiator may be used singly, or two or more kinds of polymerization initiators may be used.

The content of the polymerization initiator in the composition is not particularly limited, but is preferably equal to or greater than 0.5% by mass and less than 10% by mass and more preferably 1.0% by mass to 5.0% by mass with respect to the solid content in the composition.

As another aspect of the composition for forming an antifouling film, an aspect can be exemplified in which the composition contains the polymer (b), the polymer (c), and a solvent which can dissolve the polymers. In this aspect, by forming a coating film by means of coating using the composition and then removing the solvent by means of drying, an antifouling film can be formed.

The solvent is not particularly limited as long as it can make the polymer (b) and the polymer (c) into a homogenous solution.

The coating film can be dried by a common method. The coating film may be dried naturally or dried by heating. It is preferable to adopt a method of drying by heating because this method has excellent productivity.

### -Ionic surfactant-

It is preferable that the composition in the present disclosure contains an ionic surfactant. In a case where the composition contains an ionic surfactant, antistatic properties can be imparted to the formed antifouling film. In a case where the antifouling film has antistatic properties, the adherence of a stain is more effectively prevented.

In a case where the antifouling film is formed, for example, by a coating method, the ionic surfactant tends to be precipitated mainly in the vicinity of the surface of the coating film. Therefore, even though a small amount of the ionic surfactant is added, an antistatic effect could be obtained.

Examples of the ionic surfactant include an anionic surfactant such as alkyl sulfate (example: sodium dodecyl sulfate, sodium lauryl sulfate, and the like), alkyl benzene sulfonate (example: sodium dodecyl benzene sulfonate, sodium lauryl benzene sulfonate, and the like), alkyl sulfosuccinate (example: sodium di(2-ethylhexyl)sulfosuccinate and the like), and alkyl phosphate (example: sodium dodecyl phosphate and the like); a cationic surfactant such as an alkyl trimethyl ammonium salt and a dialkyl dimethyl ammonium salt; and an amphoteric surfactant such as alkyl carboxybetaine.

It is known that in a case where an excess of the ionic surfactant is added to the composition for forming an antifouling film, the amount of electrolytes in the system increases, and hence the silica particles are aggregated. Therefore, the composition in which an ionic surfactant and silica particles are used in combination has been avoided. However, the inventor of the present invention obtained knowledge that in a case where the ionic surfactant is incorporated into the antifouling film, the surfactant demonstrates a function of preventing the contamination with contaminants. Based on the knowledge, the inventor has found that incorporating the ionic surfactant as an antistatic agent into the composition for forming an antifouling film is a preferred aspect. In a case where the composition contains the ionic surfactant, the obtained antifouling film exhibits better antifouling properties and better self-cleaning properties by rinsing with water.

In a case where the ionic surfactant is incorporated as an antistatic agent into the composition, the content of the ionic surfactant with respect to the total solid content in the antifouling film is preferably equal to or smaller than 50% by mass, more preferably equal to or smaller than 20% by mass, and even more preferably equal to or smaller than 10% by mass. In a case where the content of the ionic surfactant is within the above range, it is possible to further improve the antifouling properties of the antifouling film without causing the aggregation of the silica particles (a). From the viewpoint of effectively improving the antifouling properties of the antifouling film by incorporating the ionic surfactant into the composition, the content of the ionic surfactant is preferably equal to or greater than 0.05% by mass.

In a case where the composition for forming an antifouling film is prepared using the ionic surfactant, the content of the ionic surfactant in the composition with respect to the total mass of the composition is preferably equal to or smaller than 1.0% by mass, more preferably equal to or smaller than 0.8% by mass, and even more preferably equal to or smaller than 0.5% by mass. In a case where the proportion of the ionic surfactant in the coating solution is within the above range, the occurrence of the aggregation of the particles (a) is inhibited, and the antifouling properties of the antifouling film are further improved.

### <Antifouling film laminate>

In a case where the antifouling film is provided on an appropriate base material, the antifouling film is more stabilized.

The antifouling film laminate in the present disclosure is a laminate having the aforementioned antifouling film in the present disclosure on a base material.

### (Base material)

The base material for forming the antifouling film laminate is not particularly limited, and it is possible to use those appropriately selected from various materials, such as glass, resin materials, metals, and ceramics, according to the purpose.

As the base material, glass can be used for a variety of uses and is suitable as a base material of the antifouling film laminate.

As the base material, resin materials are also suitable. For example, as a base material for protective materials for surveillance cameras, resin materials are frequently used. Among the resin materials, a resin material selected from polycarbonate and polymethyl methacrylate is preferable because such a resin material exhibits excellent durability against light and heat.

The base material may be a composite base material including a plurality of materials. Examples of the composite base material include a base material in which a composite material including glass and a resin material that are mixed with each other to form a complex is used, a composite resin base material obtained by kneading or bonding together a plurality of kinds of resin materials, a composite base material having a laminated structure obtained by laminating a plurality of materials, and the like.

The thickness of the base material is not particularly limited, and may be appropriately selected according to the use, the purpose of use, and the like. The thickness of the base material can be 0.05 mm to 10 mm, for example.

### <Method for manufacturing antifouling film laminate>

The antifouling film laminate can be formed by preparing the aforementioned composition for forming an antifouling film and applying the prepared composition to a desired base material.

The preparation condition for the composition for forming an antifouling film is not particularly limited. However, from the viewpoint of preventing the particles (a) from being aggregated due to the pH or the concentration of the coexisting components, the particles (a) are preferably added later in the step of preparing the composition and preferably added at the end. In a case where the particles (a) are used as a dispersion, it is preferable to make both the dispersion and the solvent used in the coating solution have acidic pH or basic pH, and to adjust the pH values of the dispersion of the particles (a) and the solvent of the coating solution to be the same as or close to each other.

The method for applying the prepared composition to a base material is not particularly limited, and examples thereof include a coating method, an immersion method, a printing method, a transfer method, and the like. Among these, a coating method is preferable because this method makes it possible to easily form a uniform coating film.

The coating method for coating a base material with the composition is not particularly limited.

As the coating method, for example, it is possible to use known methods such as press coating, brush coating, roller coating, bar coating, and dip coating (immersion coating).

The antifouling film laminate can be formed, for example, by coating a base material with the composition for forming an antifouling film by means of a coating method so as to form a coating film and drying the formed coating film.

The coating film obtained after the base material is coated with the coating solution may be dried at room temperature (25°C) or may be dried by being heated at 40°C to 150°C. In a case where the coating film is heated, the drying time can be about 1 minute to 30 minutes.

The thickness of the coating film formed by coating is preferably within a range of 50 nm to 350 nm in terms of a dry thickness.

In a case where a composition containing a polymer precursor and a polymerization initiator is used, by preparing the composition for forming an antifouling film, forming a coating film by means of coating a base material with the prepared composition by a coating method, applying energy to the formed coating film, and curing the composition, the antifouling film laminate can be formed.

That is, in a case where the composition contains a polymer precursor and a polymerization initiator, the method for manufacturing an antifouling film laminate includes applying the composition for forming an antifouling film onto a base material and applying energy to the composition for forming an antifouling film applied to the base material.

Examples of the energy to be applied include heat, actinic rays such as light, radiation, and the like.

The energy to be applied is selected according to the type of the polymerization initiator. It is preferable that the energy is applied under the condition in which the polymerization initiator can be activated.

In a case where the composition contains a polymer precursor and a polymerization initiator, by drying the coating film of the composition for forming an antifouling film and then applying energy to the formed coating film so as to cure the coating film, an antifouling film can be obtained.

For example, in a case where the polymerization initiator is a thermal polymerization initiator, the coating film is heated for 1 minute to 120 minutes by using heat energy under the temperature condition of 40°C to 150°C.

In a case where the polymerization initiator is a photopolymerization initiator, the coating film is irradiated with light energy under the irradiation condition of a cumulative intensity of 0.05 J/cm² to 10 J/cm².

### ∼Physical properties of antifouling film∼

Hereinafter, preferred physical properties of the antifouling film will be exemplified.

### [Pure water contact angle]

The pure water contact angle of the antifouling film is preferably equal to or smaller than 30°, more preferably equal to or smaller than 25°, even more preferably equal to or smaller than 15°, and particularly preferably equal to or smaller than 10°. In a case where the pure water contact angle is within the above range, the hydrophilicity of the surface of the antifouling film is further improved.

The pure water contact angle is measured using a contact angle meter M553G-XM (manufactured by Shiro Industry Co). 1 µl of pure water is added dropwise to the surface of the antifouling film, and by using the contact angle meter M553G-XM, the pure water contact angle is determined by a θ/2 method. The average of values obtained by measuring the pure water contact angle five times is taken as the value of a contact angle.

### [Contact angle obtained after period of time for which antifouling film is allowed to coexist with silicone component]

In the present disclosure, the pure water contact angle of the surface of the antifouling film, which is allowed to coexist with a silicone component for a certain period of time, is preferably equal to or smaller than 25°, more preferably equal to or smaller than 20°, even more preferably equal to or smaller than 15°, and particularly preferably equal to or smaller than 10°. In a case where the pure water contact angle of the antifouling film surface is within the above range, even though the antifouling film is allowed to coexist with a silicone component and then used, for example, in a member fixed using a silicone-based adhesive, the surface hydrophilicity of the antifouling film can be determined to be maintained at a level that is unproblematic for practical use.

For measuring the pure water contact angle, a high-temperature and high-humidity device SH-641 manufactured by ESPEC CORP is kept under the condition of 65°C and 25% RH, and an open glass container containing the antifouling film and silicone FZ-2222 manufactured by Dow Corning Toray Co., Ltd is put into the device and left to stand for 150 hours. Thereafter, by the same method as that used for measuring the pure water contact angle described above, it is possible to measure the pure water contact angle obtained after a period of time for which the antifouling film is allowed to coexist with a silicone component.

The antifouling film in the present disclosure has excellent light-transmitting properties, and the surface thereof has excellent antistatic properties and hydrophilicity. Therefore, the surface of the antifouling film has excellent antifouling properties.

Furthermore, in the antifouling film, hydrophilicity and hydrophobicity are well-balanced. Therefore, in a case where a contaminant adheres to the surface thereof, the antifouling film exhibits excellent self-cleaning properties which make it easy to wash off particularly a contaminant containing solid contents such as sludge by wetting the contaminant with moisture by using, for example, water, rain of rainy days, and the like.

Accordingly, the antifouling film and the protective film laminate in the present disclosure are suitably used as protective materials for protecting surveillance cameras and lighting installed in outdoor spaces, protective materials for headlight covers of vehicles, roof materials of garages, roadside mirrors, and traffic signs, protective materials for building materials, and the like.

### Examples

Hereinafter, the present invention will be more specifically described based on examples, but the present invention is not limited to the following examples as long as the gist of the present invention is maintained.

In the following description, unless otherwise specified, "%" means "% by mass".

### 1. Synthesis of polymer (b)

### 1-1. Synthesis of polyfunctional acrylamide compound as precursor monomer of polymer (b)

### (Synthesis example of monomer (b-1))

### (First step)

121 g (1 equivalent) of tris(hydroxymethyl)aminomethane (manufactured by TOKYO CHEMICAL INDUSTRY CO., LTD.), 84 ml of a 50% aqueous potassium hydroxide solution, and 423 ml of toluene were put into a three-neck flask having a volume of 1 L (liter) equipped with a stirrer bar and stirred. While the flask was being bathed with water such that the internal temperature of the reaction system was kept at 20°C to 25°C, 397.5 g (7.5 equivalents) of acrylonitrile was added dropwise thereto for 2 hours. After the dropwise addition, the mixture was stirred for 1.5 hours, 540 ml of toluene was then added to the reaction system, the reaction mixture was moved to a separating funnel, and a water phase was removed. The remaining organic phase was dried over magnesium sulfate and filtered through celite, and the solvent was distilled away under reduced pressure, thereby obtaining an acrylonitrile adduct. The obtained substance was analyzed by proton-nuclear magnetic resonance spectroscopy (¹H-NMR, the same shall be applied to the following description) and mass spectrometry (MS, the same shall be applied to the following description). The analysis results were exactly identical to the known analysis results. Therefore, the obtained substance was used for the next reduction reaction without being further purified.

### (Second step)

24 g of the acrylonitrile adduct obtained as above, 48 g of nickel catalyst (Raney nickel 2400, manufactured by W. R. Grace & Co.-Conn.), and 600 ml of 25% by mass aqueous ammonia:methanol = 1:1 solution were put into an autoclave having a volume of 1 L, made into a suspension, and sealed. Hydrogen at 10 Mpa was introduced into the autoclave, and a reaction was performed for 16 hours at a reaction temperature of 25°C.

By ¹H-NMR, the disappearance of the raw material was confirmed. Then, the reaction mixture was filtered through celite, and the celite was washed several times with methanol. The solvent in the filtrate was distilled away under reduced pressure, thereby obtaining a polyamine substance. The obtained substance was used for the next reaction without being further purified.

### (Third step)

30 g of the polyamine substance obtained as above, 120 g (14 equivalents) of sodium hydrogen carbonate (NaHCO₃), 1 L of dichloromethane, and 50 ml of water were put into a three-neck flask having a volume of 2 L equipped with a stirrer. In an ice bath, 92.8 g (10 equivalents) of acrylic acid chloride was added dropwise thereto for 3 hours. Then, the reaction mixture was stirred for 3 hours at room temperature (25°C, the same shall be applied to the following description). By ¹H-NMR, the disappearance of the raw material was confirmed. Then, the solvent in the reaction mixture was distilled away under reduced pressure, the reaction mixture was dried over magnesium sulfate and filtered through celite, and the solvent was distilled away under reduced pressure. Finally, the resultant was purified by column chromatography (ethyl acetate/methanol = 4:1), thereby obtaining a white solid (yield: 40%) at room temperature. The obtained compound was used as a monomer (b-1).

### (Synthesis example of monomer (b-2))

30 g of diethylene triamine (manufactured by TOKYO CHEMICAL INDUSTRY CO., LTD.) as a raw material amine, 220.1 g of NaHCO₃, 1 L of dichloromethane, and 200 ml of water were put into a three-neck flask having a volume of 2 L equipped with a stirrer. In an ice bath, 157.5 g of acrylic acid chloride was added dropwise to the three-neck flask for 3 hours, and then the mixture was stirred for 1 hour at room temperature. By ¹H-NMR, the disappearance of the raw material was confirmed. Thereafter, a water phase was removed by a liquid separation treatment, the remaining organic phase was dried over magnesium sulfate, the magnesium sulfate was filtered through celite, and then the solvent was distilled away under reduced pressure. Finally, the resultant was purified by column chromatography (ethyl acetate/methanol = 4:1), thereby obtaining a white solid (yield: 54%) at room temperature. The obtained compound was used as a monomer (b-2).

### (Synthesis example of monomer (b-3))

30 g of diethylene glycol bis(3-aminopropyl) ether (manufactured by TOKYO CHEMICAL INDUSTRY CO., LTD.) as a raw material amine, 68.6 g of NaHCO₃, 1 L of dichloromethane, and 200 ml of water were put into a three-neck flask having a volume of 2 L equipped with a stirrer. In an ice bath, 49.2 g of acrylic acid chloride was added dropwise thereto for 3 hours, and then the mixture was stirred for 1 hour at room temperature. By ¹H-NMR, the disappearance of the raw material was confirmed. Thereafter, a water phase was removed by a liquid separation treatment, the remaining organic phase was dried over magnesium sulfate, the magnesium sulfate was filtered through celite, and then the solvent was distilled away under reduced pressure. Finally, the resultant was purified by column chromatography (ethyl acetate/methanol = 4:1), thereby obtaining a white solid (yield: 44%) at room temperature. The obtained compound was used as a monomer (b-3).

### (Synthesis example of monomer (b-4))

30 g of triethylenetetramine (manufactured by Sigma-Aldrich Co. LLC.) as a raw material amine, 206.6 g of NaHCO₃, 1 L of dichloromethane, and 200 ml of water were put into a three-neck flask having a volume of 2 L equipped with a stirrer. In an ice bath, 148.4 g of acrylic acid chloride was added dropwise thereto for 3 hours, and then the mixture was stirred for 1 hour at room temperature. By ¹H-NMR, the disappearance of the raw material was confirmed. Thereafter, a water phase was removed by a liquid separation treatment, the remaining organic phase was dried over magnesium sulfate, the magnesium sulfate was filtered through celite, and then the solvent was distilled away under reduced pressure. Finally, the resultant was purified by column chromatography (ethyl acetate/methanol = 4:1), thereby obtaining a white solid (yield: 44%) at room temperature. The obtained compound was used as a monomer (b-4).

### (Synthesis example of monomer (b-5))

First, 30 g of bis(3-aminopropyl)amine (manufactured by TOKYO CHEMICAL INDUSTRY CO., LTD.), 301 g of NaHCO₃ (14 equivalents with respect to a -NH₂ group contained in bis(3-aminopropyl)amine), 1 L of dichloromethane, and 50 ml of water were put into a three-neck flask having a volume of 2 L equipped with a stirrer, and the three-neck flask was placed in an ice bath. Thereafter, 232 g (10 equivalents with respect to the aforementioned -NH₂ group, Wako Pure Chemical Industries, Ltd.) of acrylic acid chloride was added dropwise into the three-neck flask for 3 hours, and then the mixture was stirred for 3 hours at room temperature. By ¹H-NMR, the disappearance of the raw material was confirmed. Subsequently, the solvent in the reaction mixture was distilled away under reduced pressure. The reaction mixture was dried over magnesium sulfate and filtered through celite, and the solvent was distilled away under reduced pressure. Finally, the resultant was purified by silica column chromatography (as a developing solvent, a solvent was used which was obtained by mixing ethyl acetate with methanol at a volume ratio of 9:1), thereby obtaining a monomer (b-5) (yield: 43%). The monomer (b-5) was water-soluble. The melting point of the monomer (b-5) was -27°C.

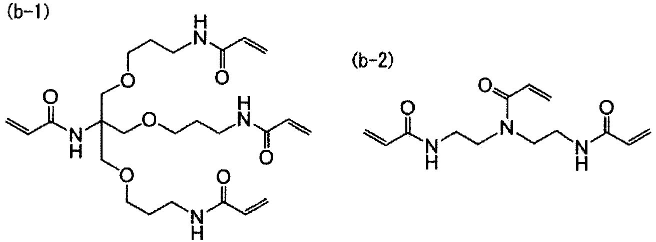

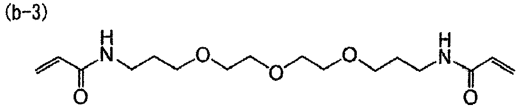

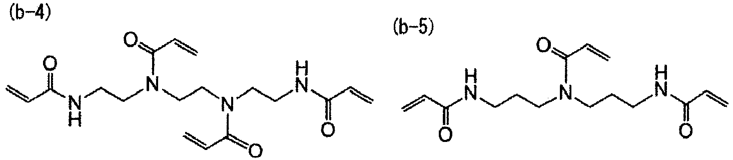

### 1-2. Synthesis of betaine monomer as precursor monomer of polymer (b)

### (Synthesis example of sulfobetaine monomer (b-i))

Dimethylaminopropyl methacrylamide (manufactured by Wako Pure Chemical Industries, Ltd., 119.18 g), acetonitrile (manufactured by Wako Pure Chemical Industries, Ltd., 350 g), and p-methoxyphenol (manufactured by Wako Pure Chemical Industries, Ltd., 0.060 g) were put into a three-neck flask having a volume of 1 L equipped with a stirring blade and a cooling pipe. While the mixture was being stirred, 95.32 g of 1,4-butanesultone (manufactured by Wako Pure Chemical Industries, Ltd.) was added dropwise thereto for 30 minutes. After the dropwise addition was finished, the mixture was heated at 80°C for 5 hours. After the reaction was finished, the reaction solution divided into two layers was left to stand at room temperature for 10 hours such that a white solid was precipitated from the lower layer. In a nitrogen atmosphere, the white solid was collected by suction filtration and washed by being stirred in 800 ml of acetone. After being washed, the solid was subjected to suction filtration again and dried, thereby obtaining a monomer (b-i) (192.15 g).

### (Synthesis example of sulfobetaine monomer (b-iii))

25.10 g of 3,3'-iminobis(N,N-dimethylpropylamine), 31.02g of potassium carbonate, 100 g of ethyl acetate, and 50 g of water were weighed and put into a 300 ml three-neck flask equipped with a stirrer and a thermometer. In an ice bath, 11.76 g of acrylic acid chloride was added dropwise thereto for 30 minutes. The mixture was further stirred for 30 minutes at 0°C, and the generated white precipitate was separated by filtration. The organic layer was dried over anhydrous magnesium sulfate, and the solvent was distilled away under reduced pressure. The obtained yellow crude product was purified by alumina column chromatography (ethyl acetate/methanol development), thereby obtaining 7.73 g of N,N-bis(3-(dimethylamino)propyl)acrylamide.

7.73 g of N,N-bis(3-(dimethylamino)propyl)acrylamide obtained as above, 3.0 mg of p-methoxyphenol, and 40 g of acetonitrile were weighed and put into a 200 ml three-neck flask equipped with a stirrer, a thermometer, and a reflux pipe. At room temperature, 8.77 g of 1,4-butanesultone was added dropwise thereto, and the mixture was reacted for 4 hours by being heated to 80°C. After the reaction mixture was left to cool, the supernatant was removed by decantation, and the purified white precipitate was made into a slurry by using 20 ml of methanol/800 ml of ethyl acetate. Thereafter, in a nitrogen atmosphere, the precipitate was collected by suction filtration and dried in an oven at 40°C under reduced pressure, thereby obtaining a monomer (b-iii) (15.30 g) as a white solid.

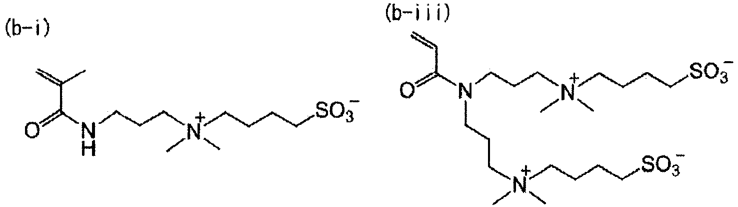

### (Monomer (b-iv) having acrylamide structure and sulfonic acid group)

As a monomer, TBAS (2-acrylamide-2-methylpropane sulfonic acid derivative) having a structure represented by (b-iv) shown below manufactured by Mitsubishi Chemical Corporation was used.

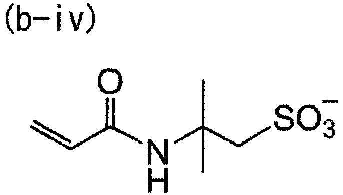

### (Polyfunctional monomer (b-6))

As a polyfunctional monomer not having an acrylamide structure, dipropylene glycol diacrylate having a structure represented by (b-6) shown below manufactured by Daicel-Allnex Ltd. was prepared.

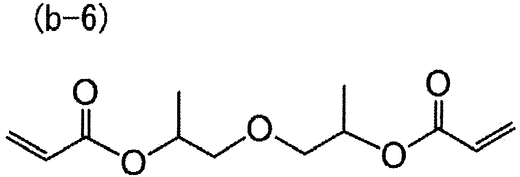

### 2. Synthesis of polymer (c)

### [Synthesis example of polymer (c-1)]

A stirrer, a thermometer, a dropping funnel, a nitrogen introduction pipe, and a reflux condenser were mounted on a 500 ml four-neck flask. While deoxygenation was being performed by introducing a nitrogen gas into the flask, 61 g of methanol and 15 g of water were added thereto, and the flask was heated until the internal temperature became 60°C. Meanwhile, a dropping solution 1 composed of 46 g of methanol, 11 g of water, 57 g of acrylamide (manufactured by Wako Pure Chemical Industries, Ltd.), and 20 g of ethyl acrylate and a dropping solution 2 composed of 46 g of methanol, 11 g of water, and 4.825 g of a polymerization initiator VA-046B (manufactured by Wako Pure Chemical Industries, Ltd.) were prepared at room temperature. Then, the dropping solution 1 and the dropping solution 2 were added dropwise to the flask for 2 hours. After the dropwise addition was finished, the reaction was continued for 2 hours at a temperature kept at 60°C. Furthermore, 2.413 g of the initiator VA-046B (manufactured by Wako Pure Chemical Industries, Ltd.) was added to the reaction solution, and the reaction was continued for 2 hours. Finally, the solution was cooled to room temperature, thereby obtaining a polymer (c-1).

### [Synthesis example of polymer (c-2)]

A stirrer, a thermometer, a dropping funnel, a nitrogen introduction pipe, and a reflux condenser were mounted on a 500 ml four-neck flask. While deoxygenation was being performed by introducing a nitrogen gas into the flask, 62 g of methanol and 26 g of water were added thereto, and the flask was heated until the internal temperature became 60°C. Meanwhile, a dropping solution 1 composed of 46 g of methanol, 20 g of water, 57 g of acrylamide (manufactured by Wako Pure Chemical Industries, Ltd.), and 26 g of n-butyl acrylate and a dropping solution 2 composed of 46 g of methanol, 20 g of water, and 4.825 g of a polymerization initiator VA-046B (manufactured by Wako Pure Chemical Industries, Ltd.) were prepared at room temperature. Then, the dropping solution 1 and the dropping solution 2 were added dropwise to the flask for 2 hours. After the dropwise addition was finished, the reaction was continued for 2 hours at a temperature kept at 60°C. Furthermore, 2.413 g of the polymerization initiator VA-046B (manufactured by Wako Pure Chemical Industries, Ltd.) was added to the reaction solution, and the reaction was continued for 2 hours. Finally, the solution was cooled to room temperature, thereby obtaining a polymer (c-2).

### [Synthesis example of polymer (c-3)]

A stirrer, a thermometer, a dropping funnel, a nitrogen introduction pipe, and a reflux condenser were mounted on a 500 ml four-neck flask. While deoxygenation was being performed by introducing a nitrogen gas into the flask, 62 g of methanol and 26 g of water were added thereto, and the flask was heated until the internal temperature became 60°C. Meanwhile, a dropping solution 1 composed of 46 g of methanol, 20 g of water, 57 g of acrylamide (manufactured by Wako Pure Chemical Industries, Ltd.), and 26 g of i-butyl acrylate and a dropping solution 2 composed of 46 g of methanol, 20 g of water, and 4.825 g of a polymerization initiator VA-046B (manufactured by Wako Pure Chemical Industries, Ltd.) were prepared at room temperature. Then, the dropping solution 1 and the dropping solution 2 were added dropwise to the flask for 2 hours. After the dropwise addition was finished, the reaction was continued for 2 hours at a temperature kept at 60°C. Furthermore, 2.413 g of the polymerization initiator VA-046B (manufactured by Wako Pure Chemical Industries, Ltd.) was added to the reaction solution, and the reaction was continued for 2 hours. Finally, the solution was cooled to room temperature, thereby obtaining (c-3).

### [Synthesis example of polymer (c-4)]

A stirrer, a thermometer, a dropping funnel, a nitrogen introduction pipe, and a reflux condenser were mounted on a 500 ml four-neck flask. While deoxygenation was being performed by introducing a nitrogen gas into the flask, 62 g of methanol and 26 g of water were added thereto, and the flask was heated until the internal temperature became 60°C. Meanwhile, a dropping solution 1 composed of 46 g of methanol, 20 g of water, 57 g of acrylamide (manufactured by Wako Pure Chemical Industries, Ltd.), and 26 g of t-butyl acrylate and a dropping solution 2 composed of 46 g of methanol, 20 g of water, and 4.825 g of a polymerization initiator VA-046B (manufactured by Wako Pure Chemical Industries, Ltd.) were prepared at room temperature. Then, the dropping solution 1 and the dropping solution 2 were added dropwise to the flask for 2 hours. After the dropwise addition was finished, the reaction was continued for 2 hours at a temperature kept at 60°C. Furthermore, 2.413 g of the polymerization initiator VA-046B (manufactured by Wako Pure Chemical Industries, Ltd.) was added to the reaction solution, and the reaction was continued for 2 hours. Finally, the solution was cooled to room temperature, thereby obtaining a polymer (c-4).

### [Synthesis example of polymer (c-5)]

A stirrer, a thermometer, a dropping funnel, a nitrogen introduction pipe, and a reflux condenser were mounted on a 500 ml four-neck flask. While deoxygenation was being performed by introducing a nitrogen gas into the flask, 62 g of methanol and 26 g of water were added thereto, and the flask was heated until the internal temperature became 60°C. Meanwhile, a dropping solution 1 composed of 46 g of methanol, 20 g of water, 57 g of acrylamide (manufactured by Wako Pure Chemical Industries, Ltd.), 26 g of t-butyl acrylate, and 1 g of 2-acryloylamino-2-methyl-1-propane sulfonate and a dropping solution 2 composed of 46 g of methanol, 20 g of water, and 4.825 g of a polymerization initiator VA-046B (manufactured by Wako Pure Chemical Industries, Ltd.) were prepared at room temperature. Then, the dropping solution 1 and the dropping solution 2 were added dropwise to the flask for 2 hours. After the dropwise addition was finished, the reaction was continued for 2 hours at a temperature kept at 60°C. Furthermore, 2.413 g of the polymerization initiator VA-046B (manufactured by Wako Pure Chemical Industries, Ltd.) was added to the reaction solution, and the reaction was continued for 2 hours. Finally, the solution was cooled to room temperature, thereby obtaining a polymer (c-5).

### 3. Synthesis of polymer (d)

### [Synthesis example of polymer (d-1)]

A stirrer, a thermometer, a dropping funnel, a nitrogen introduction pipe, and a reflux condenser were mounted on a 500 ml four-neck flask. While deoxygenation was being performed by introducing a nitrogen gas into the flask, 62 g of methanol and 26 g of water were added thereto, and the flask was heated until the internal temperature became 60°C. Meanwhile, a dropping solution 1 composed of 46 g of methanol, 20 g of water, 57 g of acrylamide (manufactured by Wako Pure Chemical Industries, Ltd.), 13 g of t-butyl acrylate, 3 g of the monomer (b-1) having a polyfunctional acrylamide structure, and 10 g of the betaine monomer (b-i) and a dropping solution 2 composed of 46 g of methanol, 20 g of water, and 4.825 g of a polymerization initiator VA-046B (manufactured by Wako Pure Chemical Industries, Ltd.) were prepared at room temperature. Then, the dropping solution 1 and the dropping solution 2 were added dropwise to the flask for 2 hours. After the dropwise addition was finished, the reaction was continued for 2 hours at a temperature kept at 60°C. Furthermore, 2.413 g of the polymerization initiator VA-046B (manufactured by Wako Pure Chemical Industries, Ltd.) was added to the reaction solution, and the reaction was continued for 2 hours. Finally, the solution was cooled to room temperature, thereby obtaining a polymer (d-1) corresponding to the polymer (d) having a structural unit derived from a betaine monomer and a structural unit derived from a hydrophobic monomer on a terminal of a partial structure derived from a polyfunctional acrylamide compound.

### [Examples 1 to 17 and Comparative Examples 1 to 4]

### -Preparation of composition for forming antifouling film-

26.00 g of an anionic surfactant: sodium di(2-ethylhexyl)sulfosuccinate (solution obtained by diluting this compound manufactured by Kishida Chemical Co., Ltd such that the concentration of the solid content becomes 0.2%) and 16.00 g of silica particles ("SNOWTEX O" (concentration of solid content: 20%) manufactured by NISSAN CHEMICAL INDUSTRIES, LTD were added to 170.00 g of ethanol and 90.00 g of water, thereby preparing a mixed solution.

According to the type and amount shown in Tables 1 to 3, the monomer (precursor of the polymer (b)), the polymer (c), the polymer (d-1), and a polymerization initiator were added to and mixed with the obtained mixed solution, thereby preparing compositions for forming an antifouling film of Examples 1 to 17 and Comparative Examples 1 to 4.

The polymerization initiators described in Tables 1 to 3 are as shown below.
- Polymerization initiator: VA-044 (trade name: Wako Pure Chemical Industries, Ltd., abbreviated to "VA-044" in the tables)
- Polymerization initiator: VA-061 (trade name: Wako Pure Chemical Industries, Ltd., abbreviated to "VA-061" in the tables)
- Polymerization initiator: VA-086 (trade name: Wako Pure Chemical Industries, Ltd., abbreviated to "VA-086" in the tables)

### [Comparative Example 5]

A composition for forming an antifouling film of Comparative Example 5 was prepared by the same method as that in Example 1, except that in Example 1, silica particles ("SNOWTEX O" (concentration of solid content: 20%) manufactured by NISSAN CHEMICAL INDUSTRIES, LTD.) were not added.

### <Comparative compound 1: synthesis of ditrimethylolpropane tetraacrylamide>

In a four-neck separable flask, 250 g (1 mol) of ditrimethylolpropane, 444 g (4.4 mol) of N-methylolacrylamide, and 0.3 g (0.002 mol) of hydroquinone monomethyl ether were dissolved in 800 ml of dehydrated tetrahydrofuran (THF) by stirring. The separable flask was installed in an oil bath, and the temperature of the oil bath was set to be 50°C. Thereafter, 0.3 g (0.0016 mol) of p-toluene sulfonic acid was added to the separable flask, the solution was stirred for 1 hour under a nitrogen gas stream and then neutralized with aqueous ammonia diluted to 10% such that the reaction was finished. Subsequently, the solvent was removed by evaporation and vacuum drying, and the obtained paste-like reaction product was recrystallized, thereby synthesizing ditrimethylolpropane tetraacrylamide (Comparative compound 1) as crystals of white powder. The Comparative compound 1 is represented by the Structural Formula shown below.

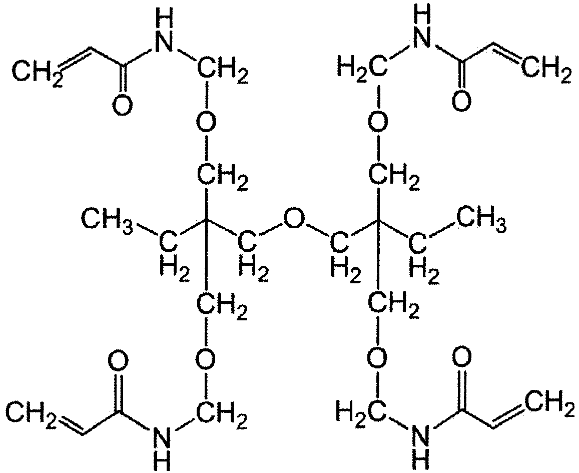

### [Comparative Example 6]

A composition for forming an antifouling film of Comparative Example 6 was prepared in the same manner as in Example 1, except that in Example 1, the synthesized Comparative compound 1 was used instead of the monomer (b-1), and a compound 2-methacryloyloxyethyl phosphorylcholine (MPC: manufactured by NOF CORPORATION) shown below was used instead of the monomer (b-i).

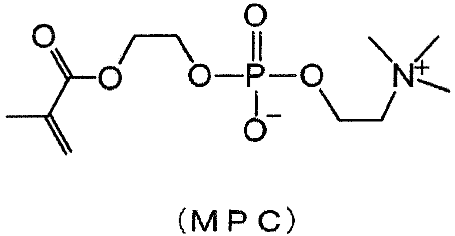

### -Formation of antifouling film laminate-

The base materials shown in Tables 1 to 3 were spray-coated with each of the obtained compositions for forming an antifouling film, thereby forming coating films. Each of the formed coating films was dried for 10 minutes at 100°C, thereby obtaining an antifouling film laminate including an antifouling film having a thickness of 130 nm (0.13 µm) on a base material.

The base materials described in Tables 1 to 3 are as shown below.
- OA-10G (trade name: alkali-free glass substrate, manufactured by Nippon Electric Glass Co., Ltd., abbreviated to "OA-10G" in the tables)
- CARBOGLASS (registered trademark) C110C (trade name: polycarbonate substrate, ASAHI GLASS CO., LTD., abbreviated to "CARBOGLASS C110C" in the tables)

For spray coating, a spray device (PREVAL, manufactured by Precision Valve Corporation) was used.

By using X-ray fluorescence elemental analysis, MS spectroscopy, structural analysis such as NMR spectroscopy, and weight-average molecular weight analysis based on gel permeation chromatography (GPC) in combination, it was confirmed that the polymer (b) and the polymer (c) were present on the surface of the antifouling film laminate.

As is evident from Tables 1 to 3 shown below, because the composition for forming an antifouling film used for forming the antifouling film of Comparative Example 2 did not contain a polymerization initiator, even after the coating film was dried, the polymer (b) was not formed, and a precursor monomer of the polymer (b) was present.

### [Example 18]

A composition for forming an antifouling film was prepared in the same manner as in Example 1, except that the polymerization initiator was changed to a photopolymerization initiator [abbreviated to "initiator A" in Table 2] having the following structure as shown in Table 2. A base material was coated with the composition, and the composition was dried for 1 hour at room temperature (25°C), thereby forming a coating film.

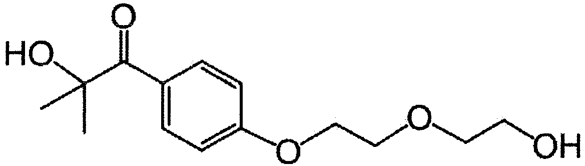

Thereafter, instead of heating, irradiation was performed using ultraviolet rays having a wavelength of 350 nm under the condition of a cumulative intensity of 3 J/cm² such that the coating film was cured, thereby obtaining an antifouling film laminate of Example 18.

### [Example 19]

A coating film of Example 19 was formed by the method described below.

### (Formation of antifouling film precursor layer)

3.06 g of a siloxane oligomer (the aforementioned specific siloxane compound: Compound 1) and 0.94 g of a 1% by mass isopropanol solution (catalyst for accelerating condensation of siloxane oligomer) of aluminum bis(ethylacetoaceate)mono(acetylacetonate) were added to and mixed with 81.07 g of ethanol. 114.80 g of an aqueous solution, in which 0.057 g of polyethylene glycol monolauryl ether (number of repeating ethylene oxide portions: 15; nonionic surfactant as a component exhibiting surface activating properties) was dissolved, was slowly added to the obtained solution, and the solution was stirred for 12 hours or longer at room temperature such that the siloxane oligomer was hydrolyzed, thereby preparing a mother liquid B-1 of a coating agent.

Then, 7.36 g of ethanol, 12.58 g of water, and 0.0056 g of polyethylene glycol monolauryl ether (number of repeating ethylene oxide portions: 15; nonionic surfactant) were added to 19.99 g of the mother liquid B-1 of a coating agent. Subsequently, 0.0011 g sodium di(2-ethylhexyl) sulfosuccinate (ionic surfactant as an antistatic agent) was added thereto and diluted. Furthermore, 0.85 g of a 1% by mass isopropanol solution (catalyst for accelerating condensation of a siloxane oligomer) of aluminum bis(ethylacetoacetate)mono(acetylacetonate) and 1.70 g of a 33% by mass dispersion of silica particles (SNOWTEX (registered trademark) O, average primary particle diameter: 10 nm to 15 nm, manufactured by NISSAN CHEMICAL INDUSTRIES, LTD.) were added to the obtained solution, thereby preparing a coating agent A-1.

The same base material as that used in Example 1 was spray-coated with the obtained coating agent A-1, thereby forming a coating film. The formed coating film was dried for 1 hour at 25°C, thereby forming an antifouling film precursor layer having a thickness of 130 nm (0.13 µm).

### (Imparting polymer)

The surface of the formed antifouling film precursor layer was spray-coated with the composition for forming an antifouling film used in Comparative Example 5 such that the thickness became 10 nm (0.01 µm) after drying, thereby forming a coating film. By drying the coating film, an antifouling film laminate of Example 19 was obtained in which the polymer (b) and the polymer (c) were imparted to the surface of the antifouling film precursor layer containing silica particles fixed by a siloxane binder.

In the column of Example 19 in Table 2, the makeup of the coating agent A-1 is schematically described in the upper portion, and the makeup of the imparted polymers is described in the lower portion.

### [Evaluation of antifouling film laminate]

Each of the obtained antifouling film laminates was evaluated based on the following standards. The results are shown in Tables 1 to 3.

### 1. Pure water contact angle

By using a contact angle meter M553G-XM (Shiro Industry Co.), 1 µl of pure water was added dropwise to the surface of the hydrophilic antifouling coating layer, and a contact angle [°] was measured by a θ/2 method. The average of values obtained by measuring the contact angle five times was taken as a contact angle.

In a case where the pure water contact angle was equal to or smaller than 20°, the antifouling film was evaluated as having excellent hydrophilicity.

### 2. Pure water contact angle obtained after period of time for which antifouling film was allowed to coexist with silicone component

A high-temperature and high-humidity device SH-641 manufactured by ESPEC CORP was kept under the condition of 65°C and 25% RH, and an open glass container containing the obtained antifouling film and silicone FZ-2222 (trade name: silicone-based adhesive) manufactured by Dow Corning Toray Co., Ltd was put into the high-temperature and high-humidity device and left to stand for 150 hours. Thereafter, by the same method as that described above, the pure water contact angle was evaluated.

In a case where the pure water contact angle, obtained after a period of time for which the antifouling film was allowed to coexist with a silicone component, was equal to or smaller than 20°, the antifouling film was evaluated as having excellent hydrophilicity.

### 3. Evaluation of antifouling properties

A natural yellow ocher pigment (manufactured by HOLBEIN WORKS, Ltd.) was evenly dispersed on the surface (side on which the antifouling film was formed) of the antifouling film laminate such that the pigment adhered thereto. Then, the rear surface (base material side) of the antifouling film laminate was tapped such that the natural yellow ocher pigment having adhered to the antifouling film fell away. This operation was repeated five times. Thereafter, the surface of the antifouling film laminate to which the natural yellow ocher pigment adhered was visually observed, and the degree of contamination was evaluated according to the evaluation standards described below.

Among the evaluation standards A to E, A and B were regarded as an allowable range.

### <Evaluation standards>

A: The natural yellow ocher pigment did not adhere to the surface of the antifouling film, and the antifouling film remained colorless and transparent.
B: Although the natural yellow ocher pigment adhered to the antifouling film, the proportion of the area to which the pigment adhered was equal to or lower than 10% of the entire area.
C: The proportion of the region of the antifouling film, to which the natural yellow ocher pigment adhered, was higher than 10% and equal to or lower than 50% of the surface area of the antifouling film.
D: Although the transparency was maintained, the proportion of the region to which the natural yellow ocher pigment adhered was higher than 50% of the surface area of the antifouling film.
E: The natural yellow ocher pigment adhered substantially to the entirety of the surface area of the antifouling film, and the antifouling film was partially or totally non-transparent.

### 4. Evaluation of self-cleaning properties by running water.

The surface of the antifouling film in the antifouling film laminate was wet with water by spraying in advance, a natural yellow ocher pigment (manufactured by HOLBEIN WORKS, Ltd.) was then evenly dispersed on the surface of the antifouling film such that the pigment adhered thereto, and the antifouling film was left to stand for 1 hour at room temperature (25°C).

The surface of the antifouling film having been left to stand was brought into contact with water for 10 seconds at a rate of 12 L of running water/min under the condition of a faucet diameter of 13 mm. Thereafter, the antifouling film was dried again at room temperature until the moisture was completely dried. Subsequently, the degree of contamination was visually observed and evaluated according to the evaluation standards described below.

Among the evaluation standards A to E, A and B were regarded as an allowable range.

### <Evaluation standards>

A: The natural yellow ocher pigment did not adhere to the surface of the antifouling film, and the antifouling film remained colorless and transparent.
B: Although the natural yellow ocher pigment adhered to the antifouling film, the proportion of the area to which the pigment adhered was equal to or lower than 10% of the entire area.
C: The proportion of the region of the antifouling film, to which the natural yellow ocher pigment adhered, was higher than 10% and equal to or lower than 50% of the surface area of the antifouling film.
D: Although the transparency was maintained, the proportion of the region to which the natural yellow ocher pigment adhered was higher than 50% of the surface area of the antifouling film.
E: The natural yellow ocher pigment adhered substantially to the entirety of the surface area of the antifouling film, and the antifouling film was partially or totally non-transparent.

### 5. Evaluation of scratch resistance

Steel wool (model number #0000) was cut in a size of 1 cm², and the surface of the cut steel wool was brought into contact with the surface side of the antifouling film of the antifouling film laminate. The antifouling film was rubbed 10 times under a load shown below, and the scratch resistance was evaluated according to the evaluation standards described below. Among the evaluation standards A to C, A and B were regarded as an allowable range.

### <Evaluation standards>

A: No scratch was made even under a load of 30 g.
B: A scratch was made under a load of 20 g.
C: A scratch was made under a load of 10 g.
D: A scratch was made under a load of 5 g.
E: A scratch was made under a load of 1 g.

**[Table 1]**

| | Composition for forming antifouling film | | | | | | | Base material | Evaluation | | | | |
|---|---|---|---|---|---|---|---|---|---|---|---|---|---|
| | Silica particles (a) | Precursor monomer of polymer (b) | | Polymer (c) | | Polymerization initiator | | | Pure water contact angle [°] | Pure water contact angle after period of time for which antifouling film was allowed to coexist with silicone component [°] | Antifouling properties | Self-cleaning properties | Scratch resistance |
| | | Type of monomer | Added amount | Type of monomer | Added amount | Type of monomer | Added amount | | | | | | |
| Example 1 | Present | (b-1) | 0.60 g | (c-1) | 1.13 g | VA-044 | 0.02 g | OA-10G | 8 | 8 | B | A | A |
| | | (b-i) | 0.95 g | | | | | | | | | | |
| Example 2 | Present | (b-2) | 0.60 g | (c-1) | 1.13 g | VA-044 | 0.03 g | OA-10G | 9 | 9 | A | A | A |
| | | (b-i) | 0.95 g | | | | | | | | | | |
| Example 3 | Present | (b-3) | 0.60 g | (c-2) | 1.13 g | VA-044 | 0.05 g | OA-10G | 8 | 8 | A | A | B |
| | | (b-i) | 0.95 g | | | | | | | | | | |
| Example 4 | Present | (b-4) | 0.60 g | (c-2) | 1.13 g | VA-044 | 0.08 g | OA-10G | 8 | 8 | B | A | A |
| | | (b-i) | 0.95 g | | | | | | | | | | |
| Example 5 | Present | (b-5) | 0.60 g | (c-3) | 1.13 g | VA-044 | 0.10 g | OA-10G | 7 | 8 | A | B | A |
| | | (b-i) | 0.95 g | | | | | | | | | | |
| Example 6 | Present | (b-1) | 0.60 g | (c-3) | 1.95 g | VA-044 | 0.05 g | OA-10G | 7 | 8 | B | B | B |
| | | (b-iii) | 0.95 g | | | | | | | | | | |
| Example 7 | Present | (b-2) | 0.60 g | (c-4) | 1.95 g | VA-044 | 0.05 g | OA-10G | 8 | 9 | A | A | B |
| | | (b-iii) | 0.95 g | | | | | | | | | | |
| Example 8 | Present | (b-3) | 0.60 g | (c-4) | 1.95 g | VA-044 | 0.05 g | OA-10G | 9 | 9 | A | B | B |
| | | (b-iii) | 0.95 g | | | | | | | | | | |
| Example 9 | Present | (b-4) | 0.60 g | (c-5) | 1.95 g | VA-044 | 0.05 g | OA-10G | 5 | 5 | A | A | A |
| | | (b-iii) | 0.95 g | | | | | | | | | | |
| Example 10 | Present | (b-5) | 0.60 g | (c-5) | 1.95 g | VA-044 | 0.05 g | OA-10G | 5 | 5 | A | A | A |
| | | (b-iii) | 0.95 g | | | | | | | | | | |

**[Table 2]**

| | Composition for forming antifouling film | | | | | | | Base material | Evaluation | | | | |
|---|---|---|---|---|---|---|---|---|---|---|---|---|---|
| | Silica particles (a) | Precursor monomer of polymer (b) | | Polymer (c) | | Polymerization initiator | | | Pure water contact angle [°] | Pure water contact angle after period of time for which antifouling film was allowed to coexist with silicone component [°] | Antifouling properties | Self-cleaning properties | Scratch resistance |
| | | Type of monomer | Added amount | Type of monomer | Added amount | Type of monomer | Added amount | | | | | | |
| Example 11 | Present | (b-1) | 0.45 g | (c-1) | 1.13 g | VA-044 | 0.05 g | CARBOGLASS C110C | 8 | 9 | B | A | A |
| | | (b-i) | 1.07 g | | | | | | | | | | |
| Example 12 | Present | (b-2) | 0.80 g | (c-2) | 1.95 g | VA-061 | 0.05 g | OA-10G | 8 | 9 | A | B | B |
| | | (b-iii) | 0.64 g | | | | | | | | | | |
| Example 13 | Present | (b-3) | 0.45 g | (c-3) | 1.95 g | VA-061 | 0.08 g | CARBOGLASS C110C | 9 | 10 | B | B | A |
| | | (b-i) | 1.07 g | | | | | | | | | | |
| Example 14 | Present | (b-4) | 0.80 g | (c-4) | 1.13 g | VA-086 | 0.03 g | OA-10G | 10 | 10 | A | B | A |
| | | (b-i) | 0.64 g | | | | | | | | | | |
| Example 15 | Present | (b-5) | 0.60 g | (c-5) | 1.95 g | VA-086 | 0.05 g | CARBOGLASS C110C | 5 | 5 | A | A | B |
| | | (b-i) | 0.95 g | | | | | | | | | | |
| Example 16 | Present | (b-6) (b-iv) | 0.60 g 0.95 g | (c-1) | 1.13 g | VA-044 | 0.02 g | OA-10G | 15 | 15 | B | B | B |
| | | | | | | | | | | | | | |
| Example 17 | Present | Polymer (d-1) | | | 2.63 g | VA-044 | 0.02 g | OA-10G | 8 | 8 | B | A | A |
| Example 18 | Present | (b-1) | 0.60 g | (c-1) | 1.13 g | (polymerization initiator A) | 0.02 g | OA-10G | 8 | 9 | B | A | A |
| | | (b-i) | 0.95 g | | | | | | | | | | |
| Example 19 | Present | Siloxane oligomer (compound 1) | | | | | | OA-10G | 8 | 9 | B | A | A |
| | | (b-1) | 0.60 g | (c-1) | 1.13 g | VA-044 | 0.02 g | | | | | | |
| | | (b-i) | 0.95 g | | | | | | | | | | |

**[Table 3]**

| | Composition for forming antifouling film | | | | | | | Base material | Evaluation | | | | |
|---|---|---|---|---|---|---|---|---|---|---|---|---|---|
| | Silica particles (a) | Precursor monomer of polymer (b) | | Polymer (c) | | Polymerization initiator | | | Pure water contact angle [°] | Pure water contact angle after period of time for which antifouling film was allowed to coexist with silicone component [°] | Antifouling properties | Self-cleaning properties | Scratch resistance |
| | | Type of monomer | Added amount | Type of monomer | Added amount | Type of monomer | Added amount | | | | | | |
| Comparative Example 1 | Present | - | - | - | - | - | - | OA-10G | 8 | 90 | B | E | E |
| Comparative Example 2 | Present | (b-1) | 0.60 g | - | - | - | - | OA-10G | 10 | 55 | D | D | E |
| | | (b-i) | 0.95 g | | | | | | | | | | |
| Comparative Example 3 | Present | - | - | (c-1) | 1.13 g | - | - | OA-10G | 35 | 60 | C | C | C |
| Comparative Example 4 | Present | (b-1) | 0.60 g | - | - | VA-044 | 0.05 g | OA-10G | 11 | 40 | C | D | D |
| | | (b-i) | 0.95 g | | | | | | | | | | |
| Comparative Example 5 | - | (b-1) | 0.60 g | (c-1) | 1.13 g | VA-044 | 0.02 g | OA-10G | 20 | 22 | D | C | B |
| | | (b-i) | 0.95 g | | | | | | | | | | |
| Comparative Example 6 | Present | Comparative compound 1 MPC | 0.60 g | (c-1) | 1.13 g | VA-044 | 0.02 g | OA-10G | 55 | 55 | D | D | C |
| | | | 0.95 g | | | | | | | | | | |

As is evident from the evaluation results shown in Tables 1 to 3, in examples, the antifouling films of all of the antifouling film laminates exhibited high hydrophilicity, and even after a period of time for which the antifouling film was allowed to coexist with a silicone component, the hydrophilicity was maintained. Furthermore, the antifouling films of examples were excellent in all of the antifouling properties, the self-cleaning properties by running water, and the scratch resistance of the surface. Therefore, the antifouling film laminates including the antifouling films of examples could exhibit excellent durability.

It was confirmed that similarly to the examples containing the polymer (b) and the polymer (c), the antifouling film laminate of Example 17, in which the polymer (d-1) having both the hydrophilic structural unit in the polymer (b) and the hydrophobic structural unit in the polymer (c) was used instead of the polymer (b) and the polymer (c), was at an unproblematic level for practical use in terms of all of the hydrophilicity of the antifouling film, the hydrophilicity after a period of time for which the antifouling film was allowed to coexist with a silicone component, the antifouling properties, the self-cleaning properties, and the scratch resistance.

In contrast, Comparative Examples 1, 2, and 4, in which the antifouling film did not contain the polymer (c), experienced the deterioration of hydrophilicity in a case where the antifouling film was allowed to coexist with a silicone component, and the self-cleaning properties and the scratch resistance thereof were poor. Particularly, in Comparative Example 1 in which the composition for forming an antifouling film did not contain the precursor of the polymer (b), a stable cured film was not formed, and the scratch resistance was poor.

Comparative Example 3 in which the antifouling film did not contain the polymer (b) had low surface hydrophilicity and was poorer than the antifouling film laminates of examples in terms of all of the antifouling properties, the self-cleaning properties, and the scratch resistance.

In Comparative Example 5 that did not contain the silica particles (a), the antifouling film exhibited low surface hydrophilicity, and the antifouling properties thereof were at a problematic level for practical use.

The antifouling film of Comparative Example 6, in which a polymer obtained by adding a structural unit derived from a monomer that had an acrylamide structure and a betaine structure but did not have a substituent selected from -SO₃⁻ and -COO⁻ to a terminal double bond of a polyfunctional compound that did not have an acrylamide structure was used instead of the polymer (b), exhibited extremely low surface hydrophilicity, and the antifouling properties, the self-cleaning properties, and the scratch resistance thereof were poor.

The entire content of JP2015-213337 field on October 29, 2015 was incorporated into the present specification by reference.

All of the documents, the patent applications, and the technical specifications described in the present specification are incorporated into the present specification by reference, as if the present specification describes that each of the documents, the patent applications, and the technical specifications are specifically and individually incorporated into the present specification by reference.

## Claims

1. An antifouling film comprising:
silica particles (a);
a polymer (b) having an acrylamide structure and at least one substituent selected from the group consisting of -SO₃M and -COOM; and
a polymer (c) having an acrylamide structure and a hydrocarbon group having 2 to 20 carbon atoms,
wherein M represents a hydrogen atom or represents an atom or an atomic group which is able to become a cation by being dissociated.

2. The antifouling film according to claim 1,
wherein the polymer (b) is a polymer obtained by adding at least one kind of betaine monomer selected from the group consisting of a compound represented by General Formula (IV) shown below and a compound represented by General Formula (V) shown below to a terminal double bond included in at least one kind of polyfunctional (meth)acrylamide compound selected from the group consisting of a compound represented by General Formula (I) shown below and a compound represented by General Formula (II) shown below, 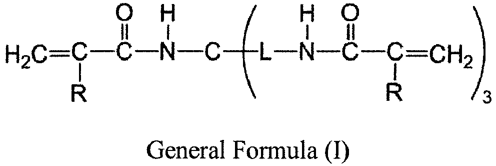 in General Formula (I), R represents a hydrogen atom or a methyl group, a plurality of R's may be the same as or different from each other, and L represents -O-, an alkylene group having 2 to 4 carbon atoms, or a divalent linking group obtained by combining -O- and an alkylene group having 2 to 4 carbon atoms, 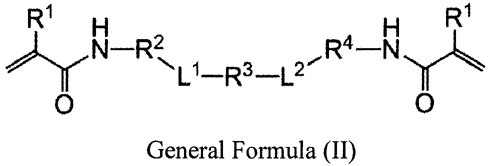 in General Formula (II), R¹ represents a hydrogen atom or a methyl group, a plurality of R¹'s may be the same as or different from each other, R² and R⁴ each independently represent -O-, an alkylene group having 1 to 4 carbon atoms, or a divalent linking group obtained by combining -O- and an alkylene group having 1 to 4 carbon atoms, R³ represents -O-, an alkylene group having 1 to 4 carbon atoms, a group represented by General Formula (III) shown below, or a divalent linking group obtained by combining two or more groups selected from -O-, an alkylene group having 1 to 4 carbon atoms, and the group represented by General Formula (III) shown below, and L¹ and L² each independently represent a single bond or a group represented by General Formula (III) shown below, 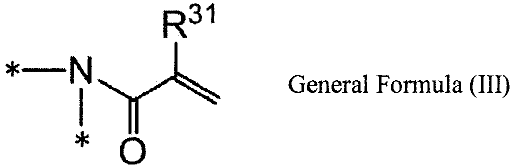 in General Formula (III), R³¹ represents a hydrogen atom or a methyl group, and * represents a binding site, 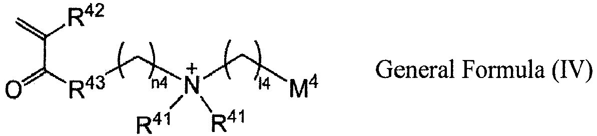 in General Formula (IV), R⁴¹ represents a methyl group, an ethyl group, a n-propyl group, or an i-propyl group, and a plurality of R⁴¹'s may be the same as or different from each other, R⁴² represents a hydrogen atom or a methyl group, R⁴³ represents -NH- or -O-, n4 represents an integer of 1 to 4, 14 represents an integer of 1 to 4, and M⁴ represents -SO₃⁻ or -COO⁻, 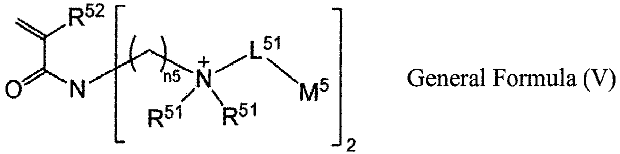 in General Formula (V), R⁵¹ represents a methyl group, an ethyl group, a n-propyl group, or an i-propyl group, a plurality of R⁵¹'s may be the same as or different from each other,
R⁵² represents a hydrogen atom or a methyl group, n5 represents an integer of 1 to 4, L⁵¹ represents a linear or branched alkylene group having 3 or 4 carbon atoms, and M⁵ represents -SO₃⁻ or -COO⁻.

3. The antifouling film according to claim 1 or 2,
wherein the polymer (c) is a polymer having a structural unit represented by General Formula (1) shown below and a structural unit represented by General Formula (2) shown below, 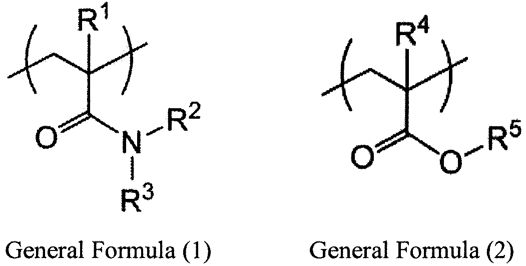 in General Formula (1) and General Formula (2), R¹ and R⁴ each independently represent a hydrogen atom or a methyl group, R² and R³ each independently represent a hydrogen atom, a methyl group, or an ethyl group, R⁵ represents an alkyl group having 2 or more carbon atoms or a substituent represented by General Formula (3) shown below, and in a case where R⁵ represents a substituent represented by General Formula (3) shown below, a content of the structural unit represented by General Formula (2) having the substituent represented by General Formula (3) with respect to all the structural units included in the polymer (c) is equal to or smaller than 70 mol%, 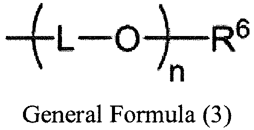 in General Formula (3), L represents an alkylene group having 2 to 6 carbon atoms, R⁶ represents an unsubstituted alkyl group having 4 or more carbon atoms or an aromatic group-substituted alkyl group, and n represents the average number of moles of polyether added and is 2 to 4.

4. The antifouling film according to any one of claims 1 to 3,
wherein at least a portion of a surface of the antifouling film is provided with the polymer (b) and the polymer (c).

5. The antifouling film according to any one of claims 1 to 4,
wherein a pure water contact angle of a surface of the antifouling film is equal to or smaller than 10°.

6. The antifouling film according to any one of claims 1 to 5,
wherein at least one kind of the polymer (b) or the polymer (c) is present between the silica particles adjacent to each other.

7. The antifouling film according to any one of claims 1 to 6,
wherein the polymer (c) further includes a structural unit represented by General Formula (4) shown below, and a content of the structural unit represented by General Formula (4) shown below with respect to all the structural units included in the polymer (c) is 0.3 mol% to 5.0 mol%, 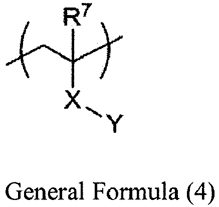 A group: 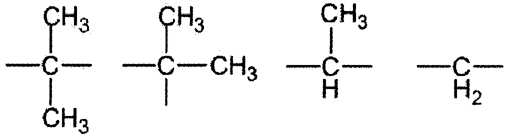 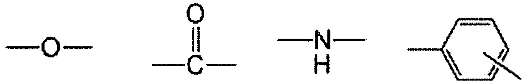 in General Formula (4), R⁷ represents a hydrogen atom or a methyl group, X represents a single bond or a divalent linking group constituted with at least one group selected from the group consisting of the divalent linking groups shown in A group, and
Y represents a carboxylic acid group, a carboxylate group, a sulfonic acid group, a sulfonate group, a phosphoric acid group, a phosphate group, a phosphonic acid group, a phosphonate group, a hydroxy group, a carbobetaine group, a sulfobetaine group, an ammonium group, or a substituent represented by General Formula (3) shown below, 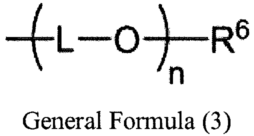 in General Formula (3), L represents an alkylene group having 2 to 6 carbon atoms, R⁶ represents an unsubstituted alkyl group having 4 or more carbon atoms or an aromatic group-substituted alkyl group, and n represents the average number of moles of polyether added and is 2 to 4.

8. An antifouling film comprising:
silica particles (a); and
a polymer (d) which has an acrylamide structure and at least one substituent selected from the group consisting of -SO₃M and -COOM and a hydrocarbon group having 2 to 20 carbon atoms,
wherein M represents a hydrogen atom or represents an atom or an atomic group which is able to become a cation by being dissociated.

9. The antifouling film according to claim 8,
wherein the polymer (d) is a polymer including a structural unit, which is derived from at least one kind of betaine monomer selected from the group consisting of a compound represented by General Formula (IV) shown below and a compound represented by General Formula (V) shown below, and a structural unit represented by General Formula (2) shown below, 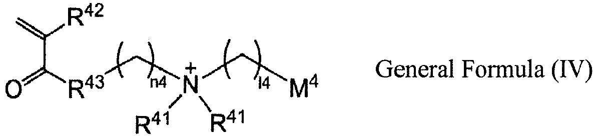 in General Formula (IV), R⁴¹ represents a methyl group, an ethyl group, a n-propyl group, or an i-propyl group, a plurality of R⁴¹'s may be the same as or different from each other,
R⁴² represents a hydrogen atom or a methyl group, R⁴³ represents -NH- or -O-, n4 represents an integer of 1 to 4, 14 represents an integer of 1 to 4, and M⁴ represents -SO₃⁻ or -COO⁻, 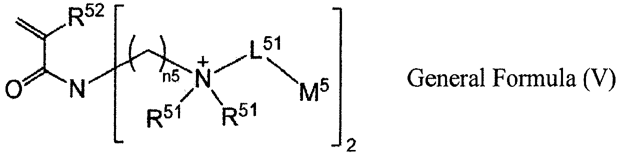 in General Formula (V), R⁵¹ represents a methyl group, an ethyl group, a n-propyl group, or an i-propyl group, a plurality of R⁵¹'s may be the same as or different from each other,
R⁵² represents a hydrogen atom or a methyl group, n5 represents an integer of 1 to 4, L⁵¹ represents a linear or branched alkylene group having 3 or 4 carbon atoms, and M⁵ represents -SO₃⁻ or -COO⁻, 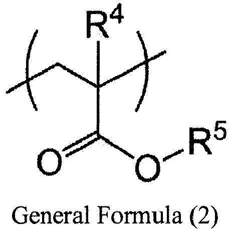 in General Formula (2), R⁴ represents a hydrogen atom or a methyl group, R⁵ represents an alkyl group or a substituent represented by General Formula (3) shown below, and in a case where R⁵ is a substituent represented by General Formula (3) shown below, a content of the structural unit represented by General Formula (2) having the substituent represented by General Formula (3) with respect to all the structural units included in the polymer (d) is equal to or smaller than 70 mol%, 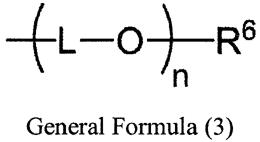 in General Formula (3), L represents an alkylene group having 2 to 6 carbon atoms, R⁶ represents an unsubstituted alkyl group having 4 or more carbon atoms or an aromatic group-substituted alkyl group, and n represents the average number of moles of polyether added and is 2 to 4.

10. The antifouling film according to claim 8 or 9,
wherein the polymer (d) is a polymer obtained by adding a partial structure including a structural unit that is derived from at least one kind of betaine monomer selected from the group consisting of the compound represented by General Formula (IV) shown below and the compound represented by General Formula (V) shown below and the structural unit that is represented by General Formula (2) shown below to all the terminals represented by STAR mark of at least one kind of polyfunctional (meth)acrylamide compound selected from the group consisting of a compound represented by General Formula (1-2) shown below and a compound represented by General Formula (II-2) shown below, 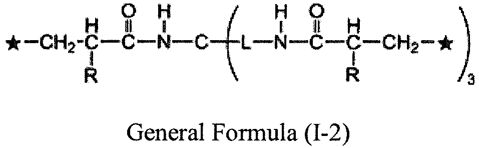 in General Formula (I-2), R represents a hydrogen atom or a methyl group, a plurality of R's may be the same as or different from each other, L represents -O-, an alkylene group having 2 to 4 carbon atoms, or a divalent linking group obtained by combining -O- and an alkylene group having 2 to 4 carbon atoms, and STAR mark represents a site to which a partial structure including a structural unit that is derived from at least one kind of betaine monomer selected from the group consisting of the compounds represented by General Formula (IV) and General Formula (V) and the structural unit that is represented by General Formula (2) is added, 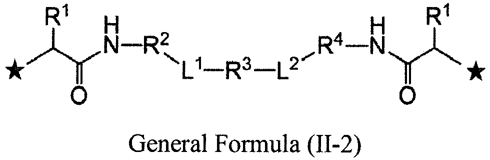 in General Formula (II-2), R¹ represents a hydrogen atom or a methyl group, R² and R⁴ each independently represent -O-, an alkylene group having 1 to 4 carbon atoms, or a divalent linking group obtained by combining -O- and an alkylene group having 1 to 4 carbon atoms, R represents -O-, an alkylene group having 1 to 4 carbon atoms, a group represented by General Formula (III-2) shown below, or a divalent linking group obtained by combining two or more groups selected from the group consisting of -O-, an alkylene group having 1 to 4 carbon atoms, and the group represented by General Formula (III-2) shown below, L¹ and L² each independently represent a single bond or the group represented by General Formula (III-2) shown below, a plurality of R¹'s may be the same as or different from each other, and STAR mark represents a site to which a partial structure including a structural unit that is derived from at least one kind of betaine monomer selected from the group consisting of the compounds represented by General Formula (IV) and General Formula (V) and the structural unit that is represented by General Formula (2) is added, 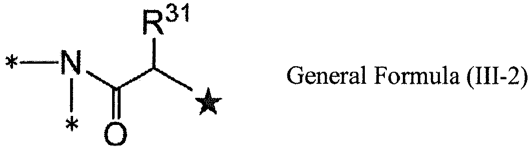 in General Formula (III-2), R³¹ represents a hydrogen atom or a methyl group, * represents a site bonded to a compound represented by General Formula (II-2), and STAR mark represents a site to which a partial structure including a structural unit that is derived from at least one kind of betaine monomer selected from the group consisting of the compounds represented by General Formula (IV) and General Formula (V) and the structural unit that is represented by General Formula (2) is added, 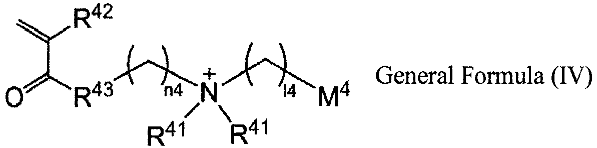 in General Formula (IV), R⁴¹ represents a methyl group, an ethyl group, a n-propyl group, or an i-propyl group, a plurality of R⁴¹'s may be the same as or different from each other,
R⁴² represents a hydrogen atom or a methyl group, R⁴³ represents -NH- or -O-, n4 represents an integer of 1 to 4, 14 represents an integer of 1 to 4, and M⁴ represents -SO₃⁻ or -COO⁻, 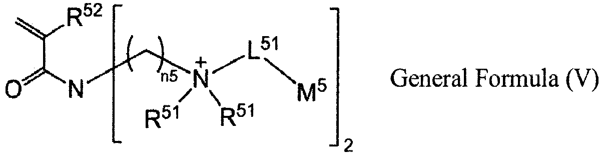 in General Formula (V), R⁵¹ represents a methyl group, an ethyl group, a n-propyl group, or an i-propyl group, a plurality of R⁵¹'s may be the same as or different from each other,
R⁵² represents a hydrogen atom or a methyl group, n5 represents an integer of 1 to 4, L⁵¹ represents a linear or branched alkylene group having 3 or 4 carbon atoms, and M⁵ represents -SO₃⁻ or -COO⁻, 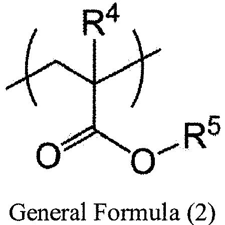 in General Formula (2), R⁴ represents a hydrogen atom or a methyl group, R⁵ represents an alkyl group or a substituent represented by General Formula (3) shown below, and in a case where R⁵ is the substituent represented by General Formula (3) shown below, a content of the structural unit represented by General Formula (2) having the substituent represented by General Formula (3) with respect to all the structural units included in the polymer (d) is equal to or smaller than 70 mol%, 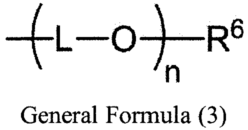 in General Formula (3), L represents an alkylene group having 2 to 6 carbon atoms, R⁶ represents an unsubstituted alkyl group having 4 or more carbon atoms or an aromatic group-substituted alkyl group, and n represents the average number of moles of polyether added and is 2 to 4.

11. A composition for forming an antifouling film, comprising:
silica particles (a);
a precursor of a polymer (b) having an acrylamide structure and at least one substituent selected from the group consisting of -SO₃M and -COOM;
a polymer (c) having an acrylamide structure and a hydrocarbon group containing 2 to 20 carbon atoms; and
a polymerization initiator (e),
wherein M represents a hydrogen atom or represents an atom or an atomic group that is able to become a cation by being dissociated.

12. An antifouling film laminate comprising:
a base material; and
the antifouling film according to any one of claims 1 to 10 on the base material.

13. A method for manufacturing an antifouling film laminate, comprising:
applying the composition for forming an antifouling film according to claim 11 onto a base material.

14. The method for manufacturing an antifouling film laminate according to claim 13, further comprising:
applying energy to the composition for forming an antifouling film applied onto the base material.
